# EUROPEAN PATENT SPECIFICATION

(11) **EP 2 273 595 B1**
(45) Date of publication and mention of the grant of the patent: **26.02.2014**
(21) Application number: 10251110.2
(22) Date of filing: 17.06.2010
(51) Int. Cl.: H01M 8/12, H01M 4/86, H01M 8/02, H01M 8/24, H01M 4/90

(54) **Solid oxide fuel cell**
Festoxidbrennstoffzelle
Pile à combustible d'oxyde solide

(30) Priority: 30.06.2009 JP 2009154597; 26.04.2010 JP 2010100489
(43) Date of publication of application: 12.01.2011
(73) Proprietor: NGK Insulators, Ltd., Nagoya-shi, Aichi-ken 467-8530 (JP)
(72) Inventor: Ohmori, Makoto, Nagoya City, Aichi-ken 467-8530 (JP)
(74) Representative: Paget, Hugh Charles Edward

(56) References cited:
- EP-A1- 1 122 806
- EP-A1- 2 157 651
- EP-A2- 1 858 106
- EP-A2- 1 919 021
- EP-A2- 1 998 396
- DE-A1- 19 630 210
- JP-A- 5 251 095
- JP-A- 10 228 911
- JP-A- 2007 012 498

## Description

### BACKGROUND OF THE INVENTION

### Field of the Invention:

The present invention relates to a solid oxide fuel cell (SOFC), and particularly to a stacked body used in an SOFC.

### Description of the Related Art:

There has conventionally been known a stacked body of an SOFC (refer to, for example, pamphlet of International Publication No. 2007-029860). The stacked body includes a fuel electrode layer, which has formed therein a channel (fuel channel) for a fuel gas (e.g., hydrogen), and which is brought into contact with the fuel gas flowing through the fuel channel to allow the fuel gas to react, a solid electrolyte layer made of a solid electrolyte and formed on at least one of the upper and lower surfaces of the fuel electrode layer, and an air electrode layer that is formed on the surface of the electrolyte layer and is brought into contact with a gas (e.g., air) containing oxygen to allow the gas to react.

As for the SOFC configured to use the stacked body described above, the applicant of the present invention has proposed an SOFC having a stack structure including plural stacked bodies and current-collector holding member (may also be referred to as "interconnector"). In the stack structure described above, two adjacent stacked bodies are stacked so as to be separated from each other in the thickness direction of the stacked body. A connection portion of a fuel electrode layer of one of the adjacent stacked bodies and a connection portion of an air electrode layer of the other stacked body are electrically connected to each other via the current-collector holding member. More specifically, the connection portion of the fuel electrode layer of one of the adjacent stacked bodies is electrically connected to a first connection portion of the current-collector holding member, and the connection portion of the air electrode layer of the other stacked body is electrically connected to a second connection portion (different from the first connection portion) of the current-collector holding member. Thus, the plural stacked bodies are electrically connected in series.

A channel (air channel) for a gas containing oxygen is formed and defined in the space between the two adjacent stacked bodies. The air channel and the fuel channel are separated by the electrolyte layer (and the other members) in order to prevent the gas containing oxygen in the air channel and the fuel gas in the fuel channel from mixing with each other.

In the structure described above, the fuel gas is supplied to the fuel channel and the gas containing oxygen is supplied to the air channel with the temperature of the SOFC being raised and heated to a working temperature (e.g., 800 °C, hereinafter merely referred to as the "working temperature") of the SOFC. Thus, the fuel gas and the gas containing oxygen are brought into contact with the fuel electrode layer and the air electrode layer respectively, whereby electricity generating reaction is produced for each stacked body. In this case, a greater output can be obtained by employing the stack structure in which plural stacked bodies are electrically connected in series as described above, compared to the case in which only a single stacked body is used.

EP 2 157 651, which is has a publication date after the effective filing date of the present application, describes a layered fuel electrode, a first layer (next to the electrolyte) having particles of Ni and YSZ, and the second layer (on top of the first layer) having particles of Ni, YSZ and zircon. The zircon particles are said to be uniformly distributed in the second layer. There is the same amount of Ni particles in each layer, and that is that there is more YSZ in the first layer than in the second. The fuel electrode thickness is given as 50 to 500µm.

EP 1 858 106 uses a warp correction layer made only of zircon, layered on a fuel electrode of Ni and YSZ. It features one layer of Ni and YSZ only and one layer of zircon only.

EP 1 919 021 similarly describes a "fuel electrode" having a "warp correction layer" on top. The warp correction layer can be made of zircon, and the fuel electrode of Ni and YSZ. It features one layer of Ni and YSZ only and one layer of zircon only.

JP 5 251095 describes a fuel cell arrangement where a series of "fuel electrode side conductive distributors" are arranged on the surface of the fuel electrode. It suggests making the distributors out of nickel/zirconia/zircon cermet. Nothing is said about the content of the fuel electrode itself, or about the distribution of zircon particles in the fuel electrode side conductive distributors.

JP 2007 012498 describes a fuel electrode which is only a single layer. The electrode can contain NiO and YSZ, along with an additive which may be zircon.

JP 10 228911 similarly describes a single layer fuel electrode containing NiO, YSZ and, as one option, zircon.

DE 196 30 210 describes a fuel cell having a fuel electrode containing nickel and zirconium oxide. It also appears to suggest replacing some of the ZrO₂ with zircon (ZrSiO₄) to change to coefficient of thermal expansion of the layer. It relates only to a single fuel electrode layer.

EP 1 998 396 and EP 1 122 806 both describe fuel cells, but neither mentions the use of zircon in the fuel electrode layer.

### SUMMARY OF THE INVENTION

In order to allow the fuel electrode layer to serve as a fuel electrode (anode electrode) of the SOFC when a fired body is used as the stacked body, it is necessary to perform a reduction process to the fuel electrode layer of the fired stacked body. The reduction process is executed by feeding a reduction gas (e.g., hydrogen) to the surface of the fuel electrode layer. In this case, a measure for preventing the reduction gas from being fed to the surface of the air electrode layer has to be taken. If the reduction gas is fed to the air electrode layer, the material constituting the air electrode layer is decomposed, whereby the air electrode layer cannot serve as the air electrode.

In the stack structure after the assembling process, the fuel channel and the air channel are separated as described above. Accordingly, when the reduction gas is fed to the respective fuel channels of the stack structure after the assembling process so as to perform the reduction process, the feed of the reduction gas to the surface of the air electrode layer can be prevented without taking a special measure for preventing the feed of the reduction gas to the surface of the air electrode layer.

It is supposed here the case in which the reduction gas is fed to the respective fuel channels in the stack structure after the assembling process so as to perform the reduction process. When the reduction process described above is executed to the fuel electrode layer, the fuel electrode layer generally contracts, with the result that the entire stacked body also contracts. This contraction is referred to as "reduction contraction" below. The size of the stacked body is reduced due to the reduction contraction. As the size of the stacked body is great, the reduction amount of the size is great.

Because of the decrease in the size of the stacked body caused by the reduction contraction, a deviation is generated in the relative positional relationship between the connection portion of the fuel electrode layer of the stacked body and the first connection portion of the current-collector holding member, which are electrically connected and fixed to each other, and the relative positional relationship between the connection portion of the air electrode layer of the stacked body and the second connection portion of the current-collector holding member, which are electrically connected and fixed to each other. As the deviation in the relative positional relationship is great, the electrical connection at a part of the electrically connected portion between the stacked body and the current-collector holding member is lost, whereby the electrical resistance between the stacked body and the current-collector holding member can be increased. As a result, the output as the entire SOFC might be reduced. In order to prevent this situation, it is desired to suppress the degree of the reduction contraction.

An object of the present invention is to provide a stacked body for a solid oxide fuel cell including a fuel electrode layer that is a fired body having a fuel channel formed therein, an electrolyte layer, and an air electrode layer, wherein a degree of a reduction contraction, which is produced when a reduction process is executed to the fuel electrode layer of the fired stacked body, can be suppressed.

In order to attain the foregoing object, the stacked body for a solid oxide fuel cell as set out in claim 1 is provided. It includes a fuel electrode layer, which has formed therein a channel (fuel channel) for a fuel gas, and which is brought into contact with the fuel gas flowing through the fuel channel to allow the fuel gas to react, an electrolyte layer made of a solid electrolyte and formed on at least one of the upper and lower surfaces of the fuel electrode layer, and an air electrode layer that is formed on the surface of the electrolyte layer and is brought into contact with a gas containing oxygen to allow the gas to react. The "stacked body" according to the present invention includes a "stacked body" that is present solely and a "stacked body" that is present as a part of the whole.

The SOFC configured by using the stacked body according to the present invention has a stack structure including, for example, plural stacked bodies according to the present invention, and current-collector holding members that are made of a conductive material for arranging and fixing the plural stacked bodies. In the stack structure, two adjacent stacked bodies are stacked in the thickness direction of the sheet body so as to be separated from each other, and a connection portion of a fuel electrode layer of one of the adjacent stacked bodies and a connection portion of an air electrode layer of the other stacked body are electrically connected to each other via the current-collector holding member. A channel (air channel) for a gas containing oxygen is formed and defined in a space between the two adjacent stacked bodies.

In the stacked body used for the stack structure, it is preferable that the electrolyte layer is formed on the surface of the fuel electrode layer so as to enclose the surrounding of the fuel electrode layer, and the air electrode layer is formed respectively on the upper surface (i.e., the upper surface of the stacked body) of the portion of the electrolyte layer formed on the upper surface of the fuel electrode layer and the lower surface (i.e., the lower surface of the stacked body) of the portion of the electrolyte layer formed on the lower surface of the fuel electrode layer.

Since the electrolyte layer is formed on the surface of the fuel electrode layer so as to enclose the surrounding of the fuel electrode layer, the air channel and the fuel channel can be separated only by the electrolyte layer: Further, since the air electrode layer is formed respectively on the upper and lower surfaces of the stacked body, the contact area between the air electrode layer and the electrolyte layer can be increased, compared to the case in which the air electrode layer is formed only one of the upper and lower surfaces of the stacked body. As a result, the reaction of the gas containing oxygen (specifically, the reaction of ionizing the gas containing oxygen) becomes active, so that the output from the entire SOFC can be enhanced.

The stacked body of the present invention is **characterized in that** the fuel electrode layer is a fired body including at least particles of a first material for allowing an oxygen ion to pass, particles of a second material for allowing an electron to pass, and particles of zircon. The "first material for allowing an oxygen ion to pass" is, for example, a yttria-stabilized zirconia (YSZ), and the "second material for allowing an electron to pass" is, for example, a nickel (Ni).

It has been found that the degree of the reduction contraction is suppressed in case where the fuel electrode layer, which is a fired body, contains zircon, compared to the case in which the fuel electrode layer does not contain zircon (i.e., the fuel electrode layer is a fired body including only particles of the first material and the particles of the second material). Therefore, when the reduction gas is fed to the respective fuel channels in the assembled stack structure so as to perform the reduction process, the deviation amount in the "relative positional relationship between the connection portion of the fuel electrode layer and the first connection portion of the current-collector holding member in the stacked body", and the deviation amount in the "relative positional relationship between the connection portion of the air electrode layer and the second connection portion of the current-collector holding member in the stacked body", are small. As a result, the situation in which the electrical connection is lost at a part of the electrically connected portion between the stacked body and the current-collector holding member is difficult to occur. Consequently, the increase in the electrical resistance between the stacked body and the current-collector holding member is suppressed, whereby the situation in which the output as the whole SOFC is reduced can be prevented.

In the stacked body according to the present invention, the fuel electrode layer includes a first fuel electrode layer serving as a base of the fuel electrode layer, and a second fuel electrode layer that is stacked (interposed) between the first fuel electrode layer and the electrolyte layer and has the contained amount of the first material greater than that of the first fuel electrode layer. In this configuration, the first fuel electrode layer includes the particles of the first material, the particles of the second material, and particles of zircon, wherein the zircon particles are uniformly distributed in the first fuel electrode layer, while the second fuel electrode layer includes only the particles of the first material and the particles of the second material.

In the configuration described above, the first fuel electrode layer is mainly used to convey the electrons obtained by the reaction represented by a later-described equation (2), while the second fuel electrode layer is mainly used to increase the speed of the reaction represented by the later-described equation (2). From the viewpoint of these operations, the first fuel electrode layer is also referred to as a fuel-electrode current-collecting layer, and the second fuel electrode layer is also referred to as a fuel-electrode active layer.

The reason why the zircon particles are not contained in the second fuel electrode layer in the configuration described above is because, if the zircon that is an insulating material is present in the vicinity of the interface between the second fuel electrode layer and the electrolyte layer, the speed of the reaction represented by the later-described equation (2) might be lowered. In this configuration, the thickness of the second fuel electrode layer is also sufficiently reduced more than the thickness of the first fuel electrode layer (i.e., the area where the zircon is contained is increased in the whole fuel electrode layer), whereby the above-mentioned "effect of suppressing the reduction contraction" can sufficiently be exhibited for the entire fuel electrode layer.

The configuration in which the zircon particles are uniformly distributed in the first fuel electrode layer is based upon the reason described below. Specifically, the zircon is an insulating material from the viewpoint of electron conduction. If the zircon particles are non-uniformly distributed in the first fuel electrode layer, the electrical resistance becomes extremely great at the region where the zircon particles are dense. When the area where the electrical resistance is extremely great is produced, the electrical resistance of the whole stacked body increases, and further, a problem might arise in which the area is heated to a high temperature due to a Joule heat generated upon the electrical generation so as to damage the stacked body. On the other hand, when the zircon particles are uniformly distributed in the first fuel electrode layer, the area where the electrical resistance extremely increases is not produced. Consequently, the average increase in the electrical resistance of the whole fuel electrode layer can be prevented.

Further, the effects described below can be provided by containing zircon in the fuel electrode layer in addition to the suppression of the reduction contraction.
1. The zircon has a property of not reacting with the first and the second materials (e.g., NiO, YSZ, etc.) constituting the fuel electrode layer. Therefore, the alteration of the first and the second materials in the fuel electrode layer can be prevented.
2. The Young's modulus of the zircon is extremely great such as about 300 GPa. Therefore, when the fuel electrode layer serves as a support layer of the stacked body, the rigidity of the fuel electrode layer serving as the support layer can be increased, which is advantageous in making the stacked body flat and thin.
3. During when the SOFC is used, the grain growth (sintering) of the second material (Ni, etc.) in the fuel electrode layer after the reduction process may be produced. Due to the grain growth, the conduction path (specifically, the path through which electrons pass) connected and formed due to the contact of the second materials (Ni, etc.) in the fuel electrode layer changes, whereby the conductivity of the fuel electrode layer is generally lowered. When the fuel electrode layer contains zircon, the grain growth can be prevented. Specifically, the reduction in the conductivity of the fuel electrode layer caused by the grain growth can be prevented.
4. The zircon itself does not become a poisoning source of the fuel electrode layer during when the SOFC is used.

In the stacked body according to the present invention, it is preferable that the stacked body has a shape of a circle, an ellipse, a square, or a rectangle, as viewed from the thickness direction of the stacked body, wherein the diameter of the circle, the major axis of the ellipse, the length of one side of the square, or the length of the long side of the rectangle is preferably 3 cm or more. The thickness of the first fuel electrode layer is 500 to 3000 µm, the thickness of the second fuel electrode layer is 3 to 30 µm, the thickness of the electrolyte layer is 1 to 20 µm, and the thickness of the air electrode layer is 3 to 50 µm, respectively.

Further, the contained amount of the zircon particles in the fuel electrode layer is preferably 3 to 30 vol.%. Further, it is preferable that the diameter of the particle of the first material contained in the first fuel electrode layer is 0.3 to 1.5 µm, the diameter of the particle of the second material contained in the first fuel electrode layer is 0.5 to 2 µm, and the diameter of the zircon particle contained in the first fuel electrode layer is 0.7 to 2.5 µm, respectively.

In the first fuel electrode layer, yttria (Y₂O₃) may be contained instead of the first material (yttria-stabilized zirconia (YSZ)). In this case, the first fuel electrode layer includes the particles of yttria (Y₂O₃), the particles of the second material (Ni), and the zircon particles.

### BRIEF DESCRIPTION OF THE DRAWINGS

Various other objects, features and many of the attendant advantages of the present invention will be readily appreciated as the same becomes better understood by reference to the following detailed description of the preferred embodiment when considered in connection with the accompanying drawings, in which:
FIG. 1 is a perspective view of a solid oxide fuel cell according to an embodiment of the present invention;
FIG. 2 is a view of the fuel cell illustrated in FIG. 1 viewed from a y-axis direction;
FIG. 3 is a sectional view of the fuel cell, illustrated in FIG. 1, taken along a plane that includes line 3 - 3 of FIG. 1 and is in parallel with an x-z plane;
FIG. 4 is a sectional view of the fuel cell, illustrated in FIG. 1, taken along a plane that includes line 4 - 4 of FIG. 1 and is in parallel with an x-z plane;
FIG. 5 is a perspective view of the stacked body illustrated in FIG. 1;
FIG. 6 are views illustrating the stacked body illustrated in FIG. 5 as viewed from x, y, and z directions respectively;
FIG. 7 is a perspective view of a fuel-electrode current-collecting layer of the stacked body in FIG. 5, taken along a plane that includes line 7 - 7 of FIG. 5 and is in parallel with an x-y plane;
FIG. 8 is a perspective view of the interconnector illustrated in FIG. 1;
FIG. 9 are views illustrating the interconnector illustrated in FIG. 8 as viewed from x, y, and z directions respectively;
FIG. 10 is a view for explaining a circulation of fuel and air in the fuel cell illustrated in FIG. 1;
FIG. 11 is a perspective view of a fuel channel forming member used for forming a fuel channel in the fuel-electrode current-collecting layer;
FIG. 12 is a view for explaining a state in which a powder compact, which is to become the fuel-electrode current-collecting layer, is press-molded;
FIG. 13 is a perspective view of the powder compact having the fuel channel forming member embedded therein;
FIG. 14 is a sectional view of the powder compact, illustrated in FIG. 13, taken along a plane that includes line 14 - 14 of FIG. 13 and is in parallel with an x-z plane;
FIG. 15 is a sectional view corresponding to FIG. 14 and illustrating a member in which a paste, which is to become a fuel-electrode active layer, is applied onto the upper and lower surfaces of the powder compact illustrated in FIG. 13, and a paste, which is to become an electrolyte layer, is applied around the powder compact;
FIG. 16 is a sectional view corresponding to FIG. 14 and illustrating a fired body in which the fuel channel is formed therein because the member illustrated in FIG. 15 is fired to burn down the fuel channel forming member;
FIG. 17 is a perspective view illustrating a fired body having an air electrode layer formed on the upper and lower surfaces of the fired body illustrated in FIG. 16;
FIG. 18 is a perspective view of a stacked body formed by forming conductive portions and through-holes on the fired body illustrated in FIG. 17;
FIG. 19 is a perspective view illustrating a state in which a channel coupling member is fixed to the portion corresponding to the through-hole of the stacked body illustrated in FIG. 18;
FIG. 20 is a perspective view illustrating a state in which the stacked body in FIG. 19 is accommodated in the interconnector;
FIG. 21 is an enlarged side view of the stacked body illustrated in FIG. 2;
FIG. 22 is a view illustrating a state in which an electrical connection is lost at an electrically connected portion between the stacked body and the interconnector due to a reduction contraction;
FIG. 23 is an enlarged side view of a stacked body according to a comparative example, corresponding to FIG. 21;
FIG. 24 is a sectional view illustrating a case in which the fuel electrode layer includes only one layer and corresponding to FIG. 3;
FIG. 25 is a sectional view corresponding to FIG. 14 and illustrating the case in which irregularities are formed on the upper and lower surfaces of the powder compact according to the shape of the channel forming member that is embedded therein;
FIG. 26 is a sectional view of the powder compact, illustrated in FIG. 25, taken along a plane that includes line 26 - 26 of FIG. 13 and is in parallel with an x-z plane; and
FIG. 27 is a sectional view corresponding to FIG. 26 and illustrating a fired body including an electrolyte layer formed by utilizing the powder compact illustrated in FIG. 26 and FIG. 27.

### DESCRIPTION OF THE PREFERRED EMBODIMENT

A solid oxide fuel cell according to an embodiment of the present invention will next be described with reference to the drawings.

Overall structure of fuel cell:

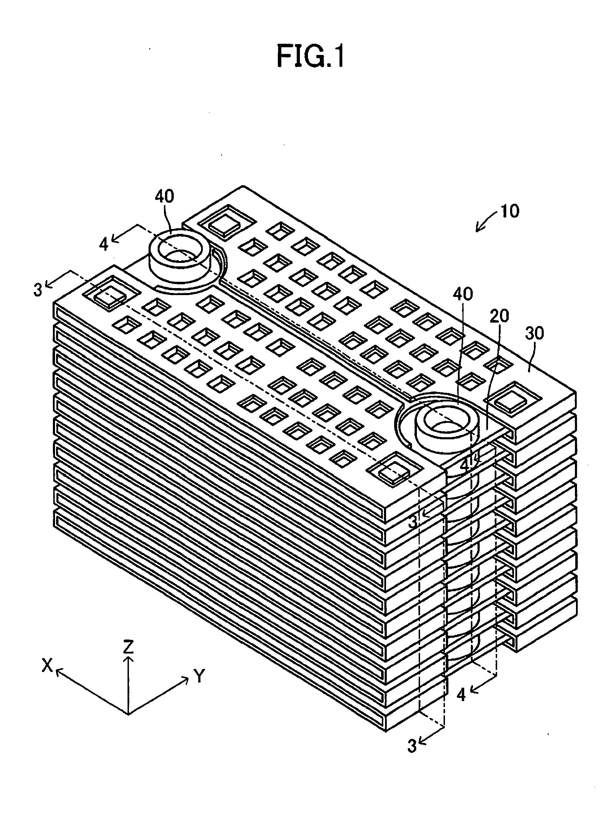

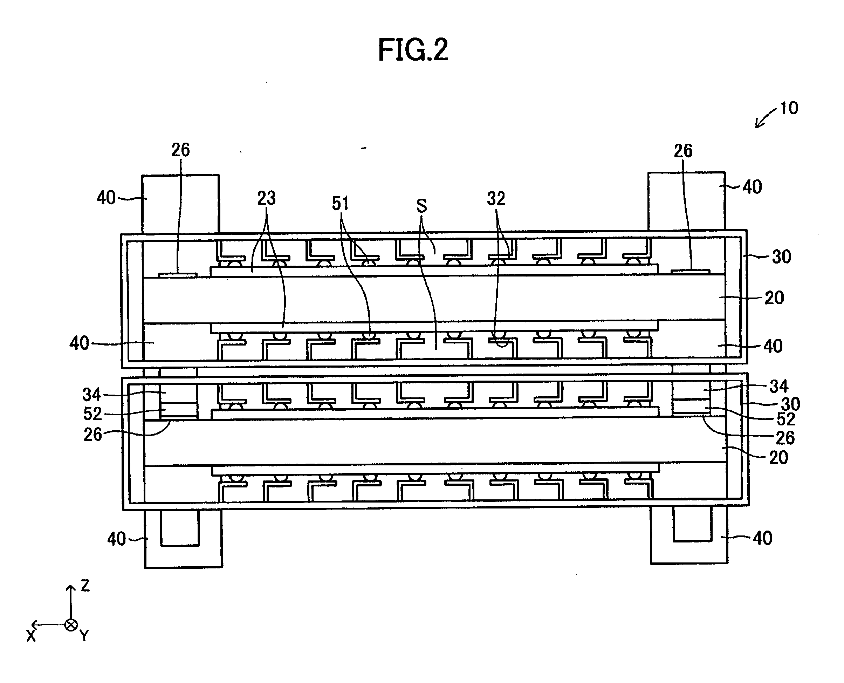

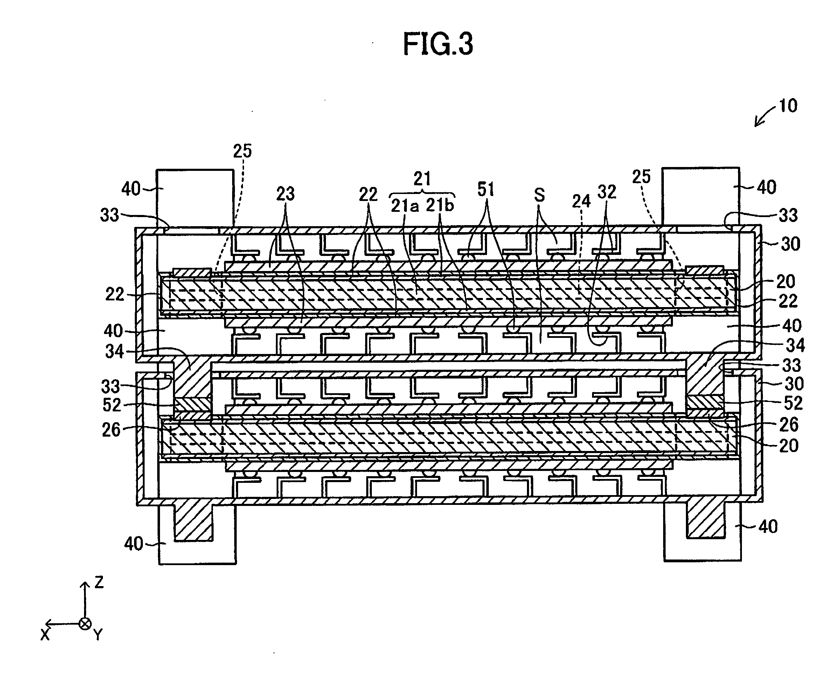

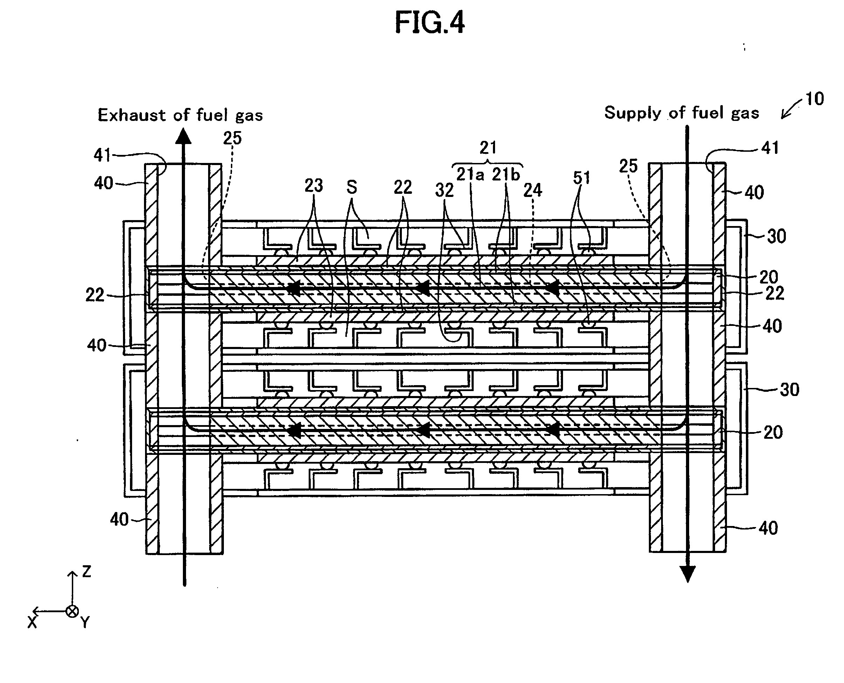

FIG. 1 is a perspective view illustrating a solid oxide fuel cell (hereinafter, referred to merely as the "fuel cell") 10 according to an embodiment of the present invention. FIG. 2 is a partial view of the fuel cell 10 viewed from a y-axis direction. FIG. 3 is a partial sectional view that corresponds to FIG. 2 and that illustrates the fuel cell taken along a plane that includes line 3 - 3 of FIG. 1 and is in parallel with the x-z plane. FIG. 4 is a partial sectional view that corresponds to FIG. 2 and that illustrates the fuel cell taken along a plane that includes line 4 - 4 of FIG. 1 and is in parallel with the x-z plane. The x-axis and y-axis are mutually orthogonal, and the z-axis is perpendicular to the x-y plane. The z-axis positive direction is sometimes referred to as "upper" direction, while the z-axis negative direction is sometimes referred to as "lower" direction below.

As can be understood from FIGS. 1 to 4, the fuel cell 10 includes plural stacked bodies 20, each having the same shape, and plural interconnectors 30, each having the same shape. Each of the stacked bodies 20 is accommodated as being held by the corresponding single interconnector 30. The fuel cell 10 is formed by stacking the plural interconnectors 30, each of which accommodates the corresponding stacked body 20. Specifically, the fuel cell 10 has a stack structure. The stacked body of the plural interconnectors 30 corresponds to the "current-collector holding member".

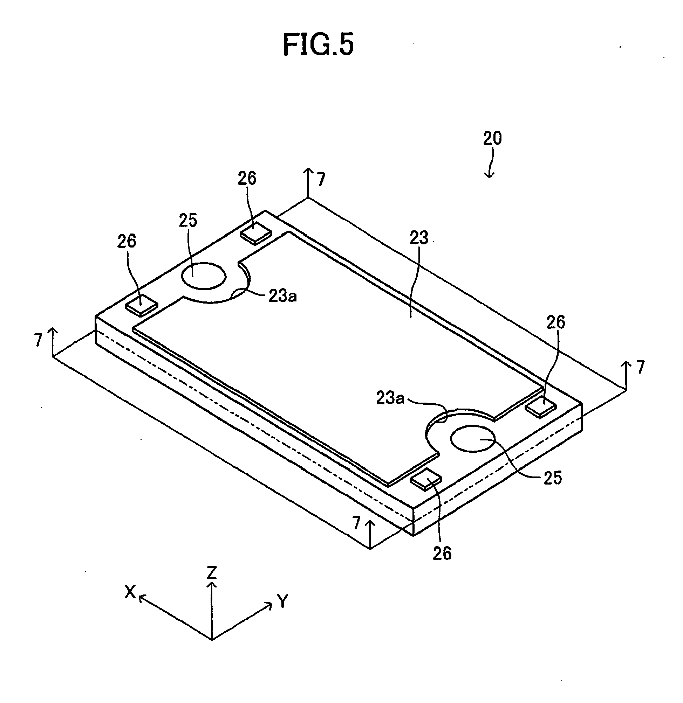

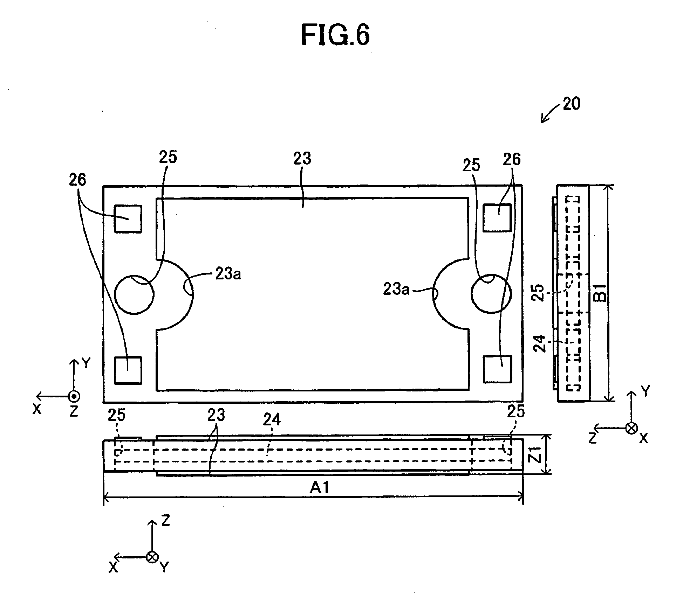

Firstly, the stacked body 20 will be described with reference to FIGS. 2 to 4 and FIGS. 5 to 7. The stacked body 20 schematically has a box-like shape (a sheet body shape having a thickness in the z-axis direction) having sides along the x-, y-, and z-axes. The length A1 of the side (long side) along the x-axis direction, the length B1 of the side (short side) along the y-axis direction, and the thickness Z1 are respectively 30 to 300 mm, 15 to 150 mm, and 0.5 to 5 mm in the present embodiment (see FIG. 6).

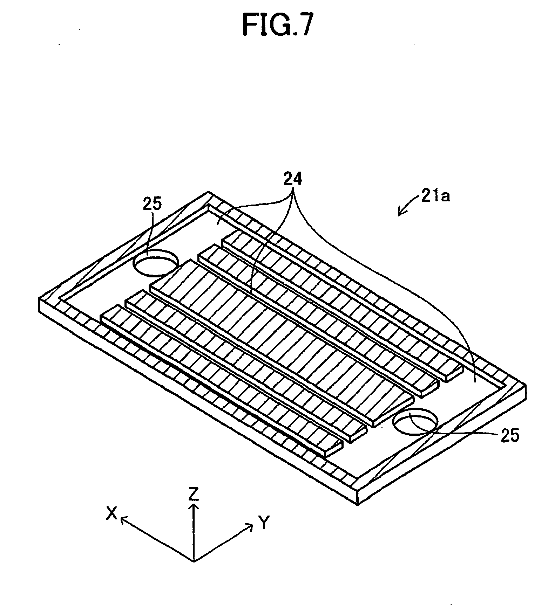

The stacked body 20 includes a fuel electrode layer 21, an electrolyte layer 22, and a pair of air electrode layers 23. The fuel electrode layer 21 has a box-like shape (a sheet body shape having a thickness in the z-axis direction) having sides along the x-, y-, and z-axes. The fuel electrode layer 21 includes a fuel-electrode current-collecting layer 21a serving as a substrate, and fuel-electrode active layers 21b formed respectively on the upper and lower surfaces of the fuel-electrode current-collecting layer 21 a. A fuel channel 24 through which a fuel gas (e.g., hydrogen gas) flows is provided in the fuel-electrode current-collecting layer 21 a (see FIG. 7, in particular).

The electrolyte layer 22 is a thin film that is formed on the surface of the fuel electrode layer 21 so as to enclose the surrounding (upper, lower, and side faces) of the fuel electrode layer 21. The pair of the air electrode layers 23 are formed respectively on the upper surface of the electrolyte layer 22 formed on the upper surface of the fuel electrode layer 21 (more specifically, formed on the upper surface of the fuel-electrode active layer 21 b formed on the upper surface of the fuel-electrode current-collecting layer 21 a), and on the lower surface of the electrolyte layer 22 formed on the lower surface of the fuel electrode layer 21 (more specifically, formed on the lower surface of the fuel-electrode active layer 21 b formed on the lower surface of the fuel-electrode current-collecting layer 21 a). Each of the pair of the air electrode layers 23 has a same sheet-body shape having a thickness in the z-axis direction. The pair of the air electrode layers 23 is formed with a pair of cutout portions 23a and 23a for avoiding the interference with a pair of through-holes 25 and 25 that is described later.

In the present embodiment, the fuel-electrode current-collecting layer 21 a is a porous fired body formed from Ni, YSZ (yttria-stabilized zircon), and zircon (ZrSiO₄) (after a later-described reduction process). The fuel-electrode active layer 21 b is a porous fired body formed from Ni and YSZ (after a later-described reduction process). The fuel electrode layer 21 serves as a fuel electrode (anode electrode). The electrolyte layer 22 is a dense fired body of YSZ. Each of the air electrode layers 23 is a porous fired body formed from LSCF (La0.6Sr0.4Co0.2Fe0.803: lanthanum strontium cobalt ferrite), and it serves as an air electrode (cathode electrode). A reaction preventing layer such as celia (CeO₂) may be provided between the electrolyte layer 22 and the air electrode layer 23. Examples of the celia include GDC (gadolinium-doped celia), SDC (samarium-doped celia), etc. The stacked body 20 has a room-temperature-to-1000 °C mean thermal expansion coefficient of about 12.8 ppm/K as a whole.

The stacked body 20 is provided with a pair of through-holes 25 and 25. Each of the through-holes 25 is formed in the vicinity of the corresponding short side of the stacked body 20 and at the central part of this side. Each of the through-holes 25 extends through the electrolyte layer 23, and the fuel electrode layer 22. The paired cell through-holes 25 are communicated with each other through the fuel channel 24 in the fuel electrode layer 21 (see FIG. 7, in particular).

Conductive plates 26, each of which is made of a conductor and is electrically connected to the fuel electrode layer 21 in the stacked body 20, are arranged at four corners on the top surface of the stacked body 20. A heat-resistant metal is used for the material of the conductive plate 26, for example. Preferable heat-resistant metal includes ZMG material (made by Hitachi Metals, Ltd.), which is a ferrite stainless for a fuel cell. Alternatively, a conductive ceramic is used as the material of the conductive plate 26. A lanthanum chromite is preferable for the conductive ceramic.

The top surface (i.e., the top surface of the conductor) of each of the conductive plates 26 is exposed to the outside. The conductive plate 26 functions as an electrically-connecting portion to a later-described leg part 34 of the interconnector 30 that is adjacent to the interconnector 30, which accommodates the conductive plate 26, from above. The stacked body 20 will be described later in more detail.

The interconnector 30 will next be described with reference to FIGS. 2 to 4 and 8 and 9. In the present embodiment, the interconnector 30 is divided into a first part 30A and a second part 30B that have a symmetric shape with respect to a plane parallel with the x-z plane at the center in the y-axis direction. For the sake of description, the interconnector 30 may be handled as an integrated member composed of the first and the second parts 30A and 30B.

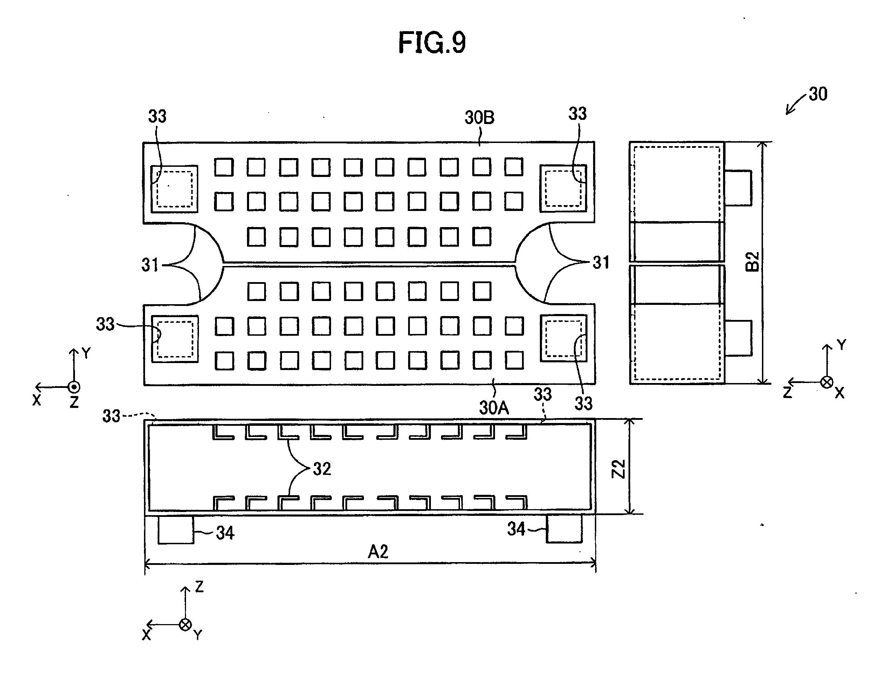

The interconnector 30 is schematically a frame member (housing member) having a box-like shape (a sheet body shape having a thickness in the z-axis direction) having sides along the x-, y-, and z-axes and made of a conductive member. The length A2 of the side (long side) along the x-axis direction, the length B2 of the side (short side) along the y-axis direction, and the thickness Z2 are respectively 40 to 310 mm, 25 to 160 mm, and 3 to 8 mm in the present embodiment (see FIG. 9).

In the present embodiment, the interconnector 30 is made of ZMG material (made by Hitachi Metals, Ltd.), which is a ferrite stainless for a fuel cell. The interconnector 30 has a room-temperature-to-1000 °C mean thermal expansion coefficient of about 12.5 ppm/K. Therefore, the thermal expansion coefficient of the interconnector 30 is substantially equal to the thermal expansion coefficient of the stacked body 20. As a result, even when the temperature of the fuel cell 10 changes, the difference in the amount of expansion and contraction is difficult to be produced between the stacked body 20 and the interconnector 30.

A space open (extending) in the y-axis direction for accommodating the stacked body 20 is formed in the interconnector (e.g., the frame member) 30. A pair of cutout portions 31, 31 is formed at the interconnector 30, which accommodates the stacked body 20, in order to avoid the interference with a later-described pair of coupling members 40.

Plural projections 32 that project upward or downward from the edge of a small window (through-hole) are formed respectively on the portion corresponding to the upper surface and the lower surface of the frame constituting the interconnector 30. As described later, these projections 32 function as electrically-connecting portions to the air electrode layer 23 of the stacked body 20 accommodated in the interconnector 30.

Windows 33 (through-holes) are formed at four corners of the portion corresponding to the top surface of the frame, which constitutes the interconnector 30, and at the positions corresponding to the conductive plates 26 on the x-y plane in the state in which the stacked body 20 is accommodated. Leg portions 34 projecting downward are formed at four corners of the portion corresponding to the bottom surface of the frame, which constitutes the interconnector 30, and at the positions corresponding to the windows 33 on the x-y plane. When viewed from the z-axis direction, the entire leg portion 34 is included in the window 33. As described later, these leg portions 34 function as electrically-connecting portions to the conductive plates 26 of the stacked body 20 accommodated in the interconnector 30 adjacent to the interconnector from below, in the above-mentioned stacked state.

The fuel cell 10 has a stack structure in which the plural interconnectors 30, each of which has the above-mentioned structure and accommodates and holds the stacked body 20 having the above-mentioned structure, are stacked. In the fuel cell 10 having the stack structure, cylindrical coupling members 40, 40, each having a through-hole 41, are mounted at the positions corresponding to the pair of through-holes 25, 25 on the x-y plane between two adjacent stacked bodies 20. With this structure, the adjacent two stacked bodies are stacked via the coupling members 40, 40 as being separated in the z-axis direction with the distance corresponding to the height of the coupling member 40 (see FIG. 4, in particular).

The through-holes 25 of the adjacent two stacked bodies 20, which are on the same positions on the x-y plane, are connected and communicated with each other through the through-holes 41 of the coupling members 40. Thus, the through-holes 41 and the through-holes 25 are alternately connected, whereby one fuel supply path extending continuously in the z-axis direction and one fuel exhaust path extending continuously in the z-axis direction are formed. The fuel supply path and the fuel exhaust path communicate with the fuel channel 24 in each of the stacked bodies 20.

The pair of the air electrode layers 23, 23 of the stacked body 20 and the plural projections 32 of the interconnector 30, which accommodates the stacked body 20, are electrically bonded and fixed with a conductive adhesive agent 51 (conductive paste) (see FIG. 3, in particular). Four leg portions 34 of a certain interconnector 30 are inserted into the corresponding four windows of the interconnector 30 adjacent to the interconnector 30 from below. The conductive plates 26 (the top surface of the conductive plates 26) of a certain stacked body 20 and the leg portions 34 (the lower surfaces of the leg portions 34) of the interconnector 30 adjacent to the interconnector 30, which accommodates the stacked body 20, from above, are electrically bonded and fixed with a conductive adhesive agent 52 (conductive paste).

Thus, the air electrode layer 23 of the upper one of the adjacent two stacked bodies 20 and the fuel electrode layer 21 of the lower one are electrically connected through the interconnector 30 that accommodates the upper stacked body 20. Specifically, plural stacked bodies 20 are electrically connected in series in the whole fuel cell 10.

The space formed between two adjacent stacked bodies 20 is utilized as an air channel S through which a gas containing oxygen (e.g., air) flows. As described above, the electrolyte layer 22 encloses the fuel electrode layer 21. Accordingly, the air channel S and the fuel channel 24 are separated only by the electrolyte layer 22.

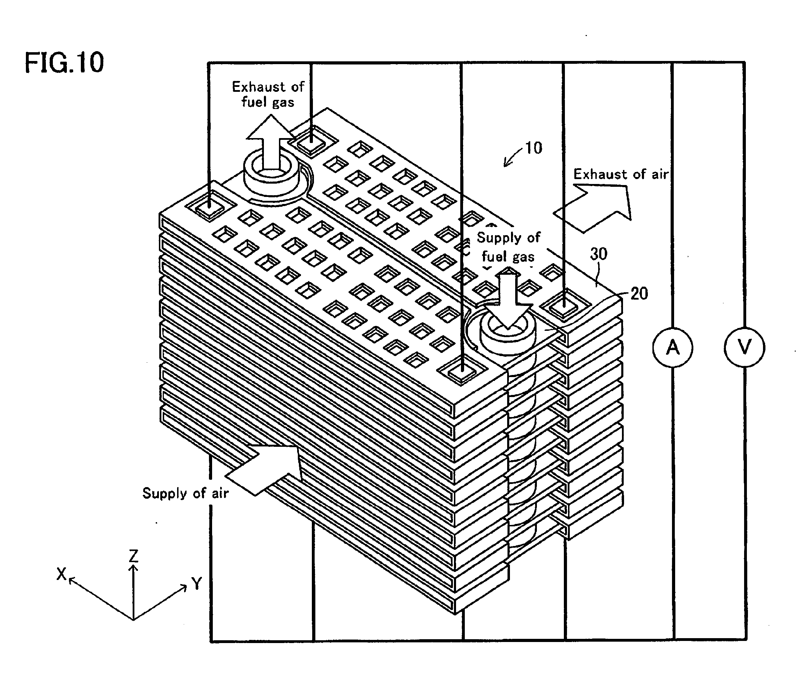

In the thus-configured fuel cell 10, as shown in FIG. 10, air is supplied from the y-axis direction, while the fuel gas is supplied from the fuel supply channel. The supplied air flows through the air channel S to be in contact with the pair of the air electrode layers 23, 23 of each of the stacked bodies 20. On the other hand, the supplied fuel gas passes respectively through the fuel channel 24 in each of the stacked bodies 20 and exhausted from the fuel exhaust channel (see an arrow in FIG. 4). As described above, the fuel gas is supplied to the fuel channel 24, and air is supplied into the air channel S, whereby electricity is generated based upon the chemical reactions expressed below by Formulas (1) and (2).

(1/2) · O₂ + 2^{e-} → O²⁻ (at air electrode layer 23) (1)

H₂ + O²⁻ → H₂O + 2^{e-} (at fuel electrode layer 21) (2)

Since the fuel cell (SOFC) 10 utilizes oxygen conductivity of the electrolyte layer 22 for generating electricity, the working temperature of the fuel cell 10 is generally 600 °C or higher. Accordingly, the temperature of the fuel cell 10 is raised from room temperature to the working temperature (e.g., 800 °C) by means of an external heating mechanism (e.g., a heating mechanism that uses a resistance heater or a heating mechanism that utilizes heat generated through combustion of a fuel gas).

### Example of manufacturing method

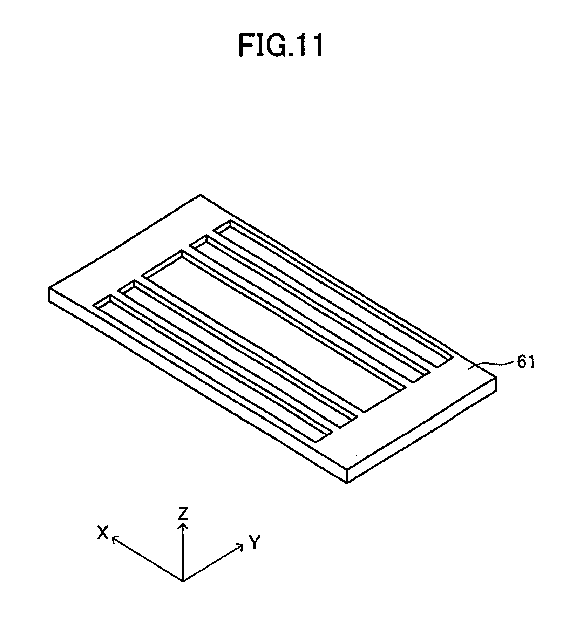

Next, an example of a method for manufacturing the fuel cell 10 will be briefly described. First, the method for manufacturing the stacked body 20 will be described. In order to form the fuel channel 24 in the fuel electrode layer 21, a channel forming member 61 illustrated in FIG. 11 and having the shape same as that of the fuel channel 24 is prepared. The channel forming member 61 is formed by using a pore-forming agent (e.g., cellulose) with one of known methods. A powder 62 that is to become a raw material of the fuel-electrode current-collecting layer 21 a is prepared. The powder 62 contains particles of NiO, YSZ, zircon, and pore-forming agent (e.g., cellulose) uniformly. The reason why the powder 62 contains the pore-forming agent is because the fuel electrode layer is made to be porous.

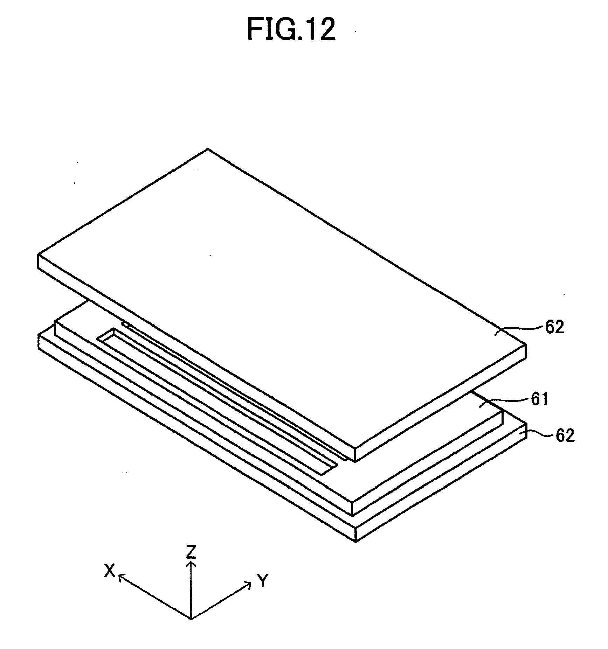

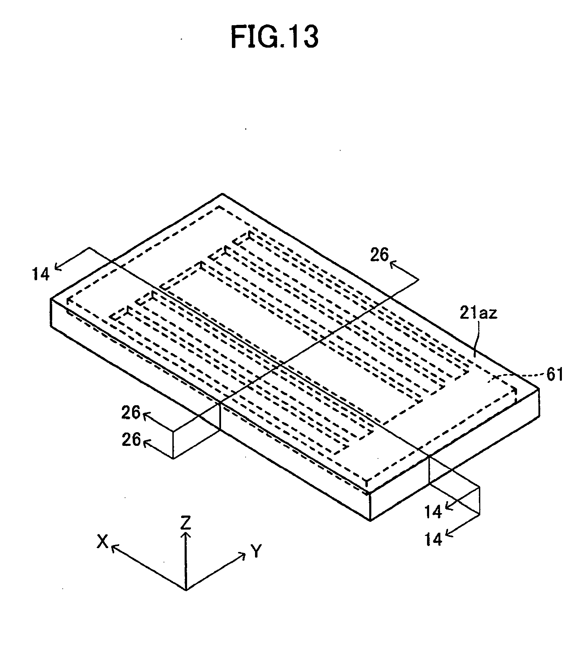

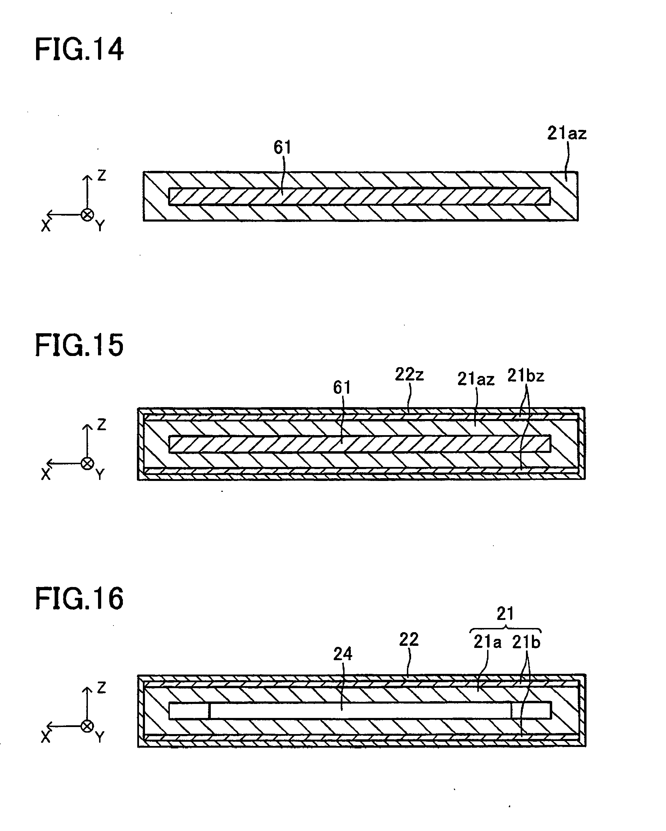

Next, as illustrated in FIG. 12, the powder 62 is pressed into a shape corresponding to the fuel-electrode current-collecting layer 21 a with the use of a (single-axis) pressing machine in order that the channel forming member 61 is embedded. With this operation, a box-shaped powder compact 21az having the channel forming member 61 embedded therein is formed as illustrated in FIG. 13. FIG. 14 is a sectional view of the powder compact 21 az taken long a plane that includes a line 14 - 14 of FIG. 13 and is parallel with the x-z plane.

Next, as illustrated in FIG. 15, a YSZ-NiO paste film 21bz, which is to become the fuel-electrode active layer 21 b later, is formed on the upper and lower surfaces of the powder compact 21az, and a YSZ paste film 22z, which is to become the electrolyte layer 22 later, is formed around (at the upper, lower, and side surfaces of) the powder compact 21 az having the film 21bz formed thereon. The film 21bz may be formed in such a manner that a paste is applied onto the upper and lower surfaces of the powder compact 21 az or that a ceramic green sheet is adhered onto the upper and lower surfaces of the powder compact 21az.

Similarly, the film 22z may be formed in such a manner that a paste is applied around (at the upper, lower, and side surfaces of) the powder compact 21 az having the film 21bz formed thereon or that the surrounding (upper, lower, and side surfaces) of the powder compact 21az having the film 21bz formed thereon is covered by a ceramic green sheet. The powder compact 21 az having the film 21bz formed thereon can be covered by the ceramic green sheet in such a manner that the green sheet is adhered onto the upper and lower surfaces and the green sheet is wound around the side surface. A ceramic paste may further be applied onto the side surface of the film 22z, where a thermal stress is increased, for reinforcement.

As described above, the member having the films 21bz and 22z formed thereon is fired at a predetermined temperature for a predetermined time (e.g., 1400°C for one hour). With this process, the channel forming member 61 is burnt down to form a fired body including the fuel electrode layer 21 (including the fuel-electrode current-collecting layer 21 a and fuel-electrode active layers 21 b formed respectively on the upper and lower surfaces of the fuel-electrode current-collecting layer 21 a) having the fuel channel 24 formed therein and the electrolyte layer 22 enclosing the fuel electrode layer 21 as illustrated in FIG. 16. Since the pore-forming agent contained in the powder 62 is burnt down, the fuel electrode layer 21 is made to be porous.

When the reaction preventing layer made of celia (CeO₂) is interposed between the electrolyte layer 22 and the air electrode layer 23 as described above, a paste film, which is to become the reaction preventing layer later, is formed on the entire surface (upper, lower, and side surfaces) of the YSZ paste film 22z formed around the powder compact 21 az before the firing. This film is formed by applying a paste, or utilizing a ceramic green sheet, like the formation of the YSZ paste film 22z. This film and the YSZ paste film 22z are both fired.

Alternatively, after the YSZ paste film 22z is fired, a paste film, which is to become the reaction preventing layer later, may be formed by a printing process on only the upper and lower surfaces of the fired body, and then, this film may be fired. In this case, it is preferable that the pattern of this film is set such that the entire outline of the reaction preventing layer is present at the outside of the entire outline of the air electrode layer 23, as viewed from the z-axis direction. For example, it is adjusted such that the outline of this film is present at the outside of the outline of the later-described "a sheet 23z that is to become the air electrode layer 23 later" by about 1 mm.

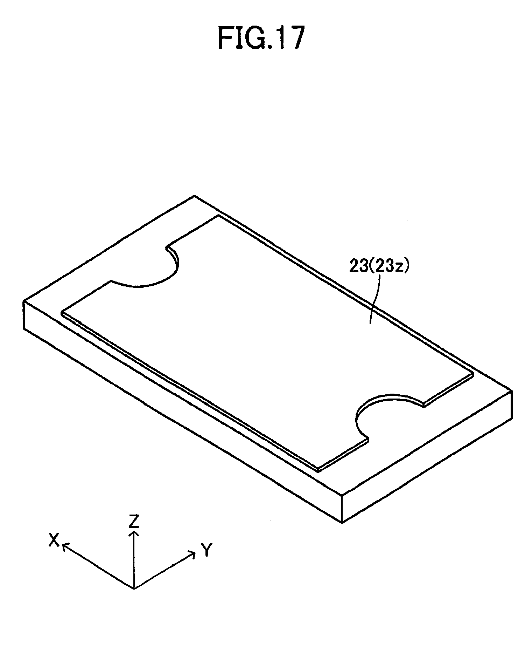

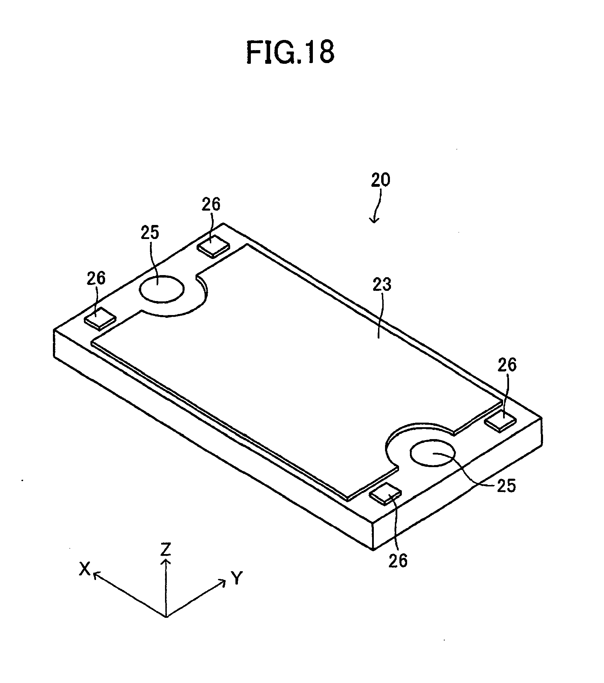

Next, as illustrated in FIG. 17, the sheet 23z that is to become the air electrode layer 23 later is formed on the upper and lower surfaces of the fired body with a printing process. This sheet 23z is fired at a predetermined temperature for a predetermined time (e.g., 1000°C for one hour). With this process, the air electrode layers 23, 23 are formed on the upper and lower surfaces of the fired body. Then, as illustrated in FIG. 18, a pair of through-holes 25, 25 is formed on the fired body with one of know processing methods. Further, four conductive plates 26 are arranged so as to be electrically connected to the internal fuel electrode layer 21 (more specifically, to the fuel-electrode active layer 21 b) of the fired body. Thus, the stacked body 20 is completed. The thus formed stacked bodies 20 are prepared in a required number.

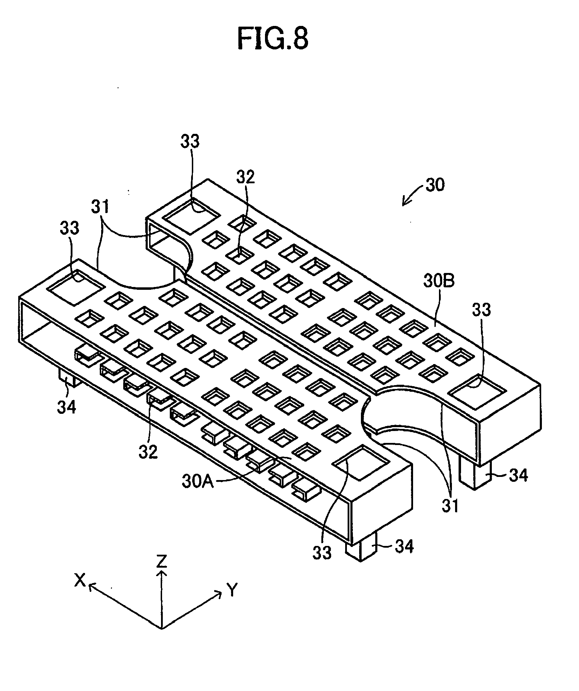

Next, a method of forming the interconnector 30 will be described. The interconnector 30 (actually, the first and second portions 30A and 30B) is formed by processing a thin plate, which is made of ZMG material (made by Hitachi Metals, Ltd.), which is a ferrite stainless for a fuel cell, into a shape illustrated in FIGS. 8 and 9 with a known method (etching, cutting, pressing, etc.) The formed interconnectors 30 (actually, the first and second portions 30A and 30B) are prepared in a required number.

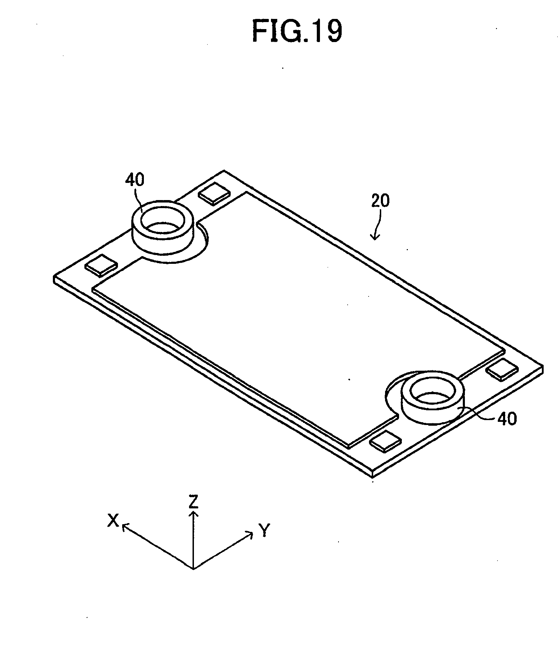

Subsequently, as illustrated in FIG. 19, the coupling members 40 are bonded and fixed with an adhesive agent (e.g., a glass paste) at the position corresponding to the pair of through-holes 25, 25 on the top surface of each of the prepared plural sheet bodies 20. Further, a conductive paste (conductive adhesive agent 51) is applied onto the plural projections 32 of each of the interconnectors 30 (actually, the first and second portions 30A and 30B).

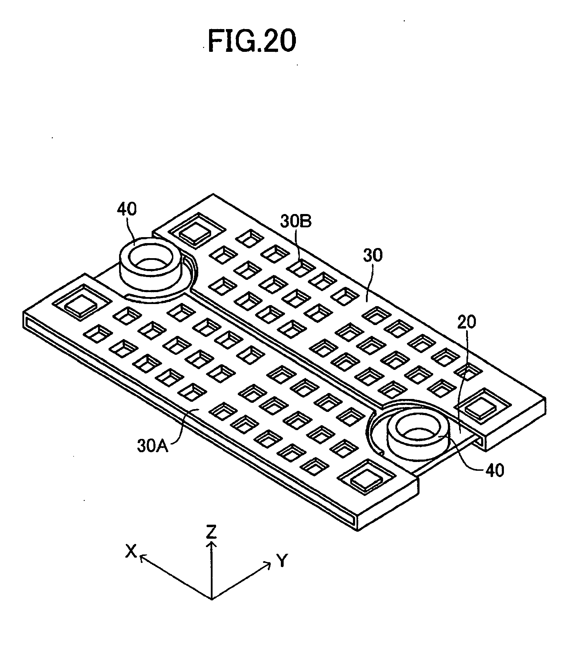

Then, as illustrated in FIG. 20, each of the stacked bodies 20 to which the coupling members 40 are bonded and fixed is accommodated into the interconnector 30 (actually, the first and second portions 30A and 30B) having the conductive adhesive agent 51 applied thereon. With this, the pair of air electrode layers 23, 23 of each stacked body 20 and the plural projections 32 of the interconnector 30, which accommodates the stacked body 20, are electrically connected and fixed by the conductive adhesive agent 51 (see FIG. 3).

Next, a conductive paste (conductive adhesive agent 52) is applied to the leg portions 34 (the lower surfaces of the leg portions 34) of each interconnector 30. The plural interconnectors 30 are stacked in such a manner that four windows 33 of a certain interconnector 30 have inserted therein four leg portions 34 of the interconnector 30 adjacent to the interconnector 30 from above. Thus, a stack structure is formed. In addition, the conductive plates 26 (the top surfaces of the conductive plates 26) and the leg portions 34 (the lower surfaces of the leg portions 34) of the interconnector 30 adjacent to the interconnector, which accommodates the stacked body 20, from above, are electrically connected and fixed with the conductive adhesive agent 52 (see FIG. 3). Specifically, plural stacked bodies 20 are electrically connected in series. Further, bonding (sealing) between various coupling members is simultaneously performed in order to completely separate the fuel gas and air.

Next, a reduction process is performed to the fuel electrode layer 21 of each stacked body 20 in the stack structure. In the reduction process, a heat treatment is performed to the stack structure, wherein the temperature of the stack structure is kept to be a predetermined temperature (e.g., 800°C) for a predetermined time. At the same time, a reduction gas (hydrogen gas in the present embodiment) is introduced in the fuel channel 24 through the fuel supply channel. As described above, the fuel channel 24 and the air channel S are separated by the electrolyte layer 22. Accordingly, the supply of the reduction gas to the surface of the air electrode layer 23 can be prevented without taking a special measure for preventing the supply of the reduction gas to the surface of the air electrode layer 23 during the reduction process.

Due to the flow-in of the reduction gas, NiO, which is one of NiO, YSZ, and zircon constituting the fuel electrode layer 21, is reduced. As a result, the fuel electrode layer 21 becomes Ni-YSZ-zircon cermet that can function as the fuel electrode (anode electrode). Thus, the assembly of the fuel cell 10 is completed.

### Detail of stacked body

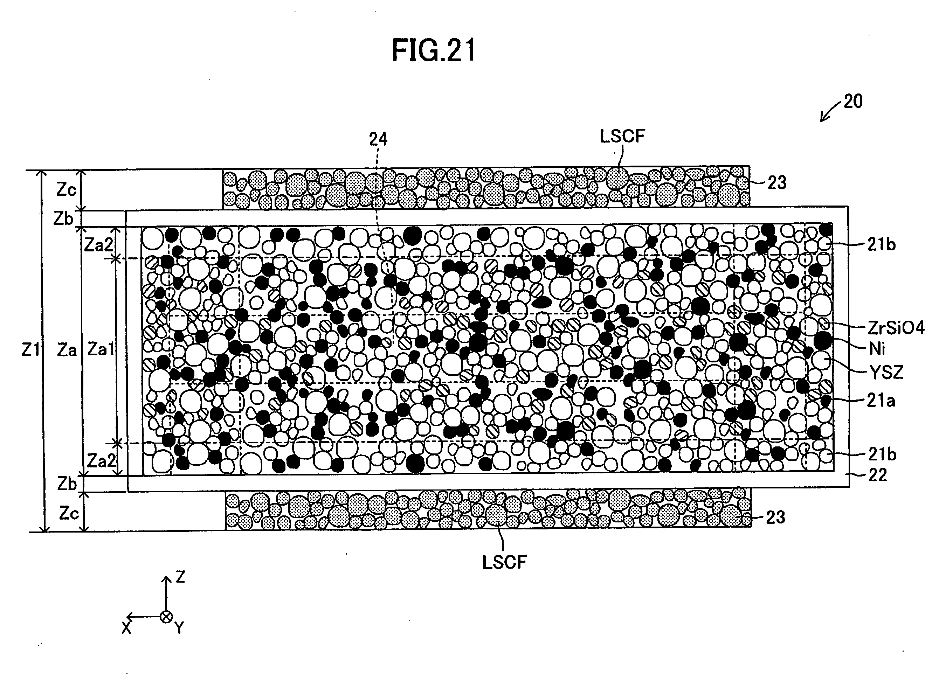

The detail of the stacked body 20 will next be described. As shown in FIG. 21 that is a partial side view of the stacked body 20, the fuel electrode layer 21 includes the fuel-electrode current-collecting layer 21 a and the fuel-electrode active layers 21 b formed respectively on the upper and lower surfaces of the fuel-electrode current-collecting layer 21 a. The fuel-electrode current-collecting layer 21a (after the reduction process) is a porous layer made of fine particles of Ni, YSZ, and zircon (ZrSiO₄) The diameters of each of the Ni particles, YSZ particles, and ZrSiO₄ particles contained in the fuel-electrode current-collecting layer 21 a are within the range of 0.3 to 1.5 µm, within the range of 0.5 to 2 µm, and within the range of 0.7 to 2.5 µm respectively in the present embodiment. The fuel-electrode active layer 21 b (after the reduction process) is a porous layer made of fine particles of Ni and YSZ. The diameters of each of the Ni particles, and YSZ particles contained in the fuel-electrode active layer 21 b are within the range of 0.3 to 1.5 µm, and within the range of 0.5 to 2 µm respectively in the present embodiment. The content percentage (volume %) of YSZ is greater in the fuel-electrode active layer 21 b than in the fuel-electrode current-collecting layer 21 a.

The fuel -electrode current-collecting layer 21 a is mainly used for carrying electrons, which are obtained by the reaction represented by the formula (2), to the conductive plates 26, while the fuel-electrode active layer 21 b is mainly used to increase the speed of the reaction represented by the formula (2). The reason why the fuel-electrode active layer 21 b does not contain zircon particles is because the speed of the reaction represented by the formula (2) might be decreased, if zircon that is an insulating material is present in the vicinity of the interface between the fuel-electrode active layer 21 b and the electrolyte layer 22.

In the fuel-electrode current-collecting layer 21a, the zircon particles are uniformly distributed (the distribution state of the zircon particles is homogenous) in the x-y plane direction and z-axis direction. The state in which "the zircon particles are uniformly distributed in the x-y plane direction (the distribution state of the zircon particles is homogenous)" means that the contained amount of the zircon particles per unit volume is uniform all over the x-y plane direction at any positions in the z-axis direction. The state in which "the zircon particles are uniformly distributed in the z-axis direction (the distribution state of the zircon particles is homogenous)" means that the contained amount of the zircon particles per unit volume is uniform all over the z-axis direction at any positions in the x-y plane direction. Specifically, the contained amount of the zircon particles per unit volume in the fuel-electrode current-collecting layer 21a is uniform therein, and the contained amount thereof is 3 to 30 vol.% in this embodiment. The contained amounts of Ni and YSZ in the fuel-electrode current-collecting layer 21 a are 35 to 55 vol.% and 15 to 62 vol.% respectively. On the other hand, the contained amounts of Ni and YSZ in the fuel-electrode active layer 21 b are 25 to 45 vol.% and 55 to 72 vol.% respectively.

The electrolyte layer 22 is a dense layer made of fine YSZ particles. The diameter of the YSZ particle contained in the electrolyte layer 22 is 0.3 to 3 µm in the present embodiment. The particle diameter can be adjusted by the additive amount of Y203 to YSZ or firing temperature. The air electrode layer 23 is a porous layer made of fine LSCF particles. The diameter of the LSCF particle contained in the air electrode layer 23 is 0.2 to 2 µm in the present embodiment.

The thickness Z1 of the stacked body 20 is uniform all over. In the present embodiment, the thickness Z1 is 0.5 to 5 mm as described above in the present embodiment. The thickness Za of the fuel electrode layer 21 is 500 to 3000 µm, the thickness Zb of the electrolyte layer 22 is 1 to 20 µm, and the thickness Zc of the air electrode layer 23 is 3 to 50 µm. The thickness Za1 of the fuel-electrode current-collecting layer 21a is 500 to 3000 µm, and the thickness Za2 of the fuel-electrode active layer 21 b is 3 to 30 µm, respectively, for example

The room-temperature-to-1000°C mean thermal expansion coefficients of the fuel electrode layer 21, the electrolyte layer 22, and the air electrode layer 23 are 11.5 to 13 ppm/K, 10 to 11.5 ppm/K, and 10 to 14 ppm/K, respectively.

### Operation and effect

The operation and effect obtained by containing zircon in the fuel electrode layer 21 (fuel-electrode current-collecting layer 21 a) as described above will be described below.

When the reduction process is executed to the fuel electrode layer 21, the fuel electrode layer 21 is contracted by an amount corresponding to the amount of O (oxygen) that is removed from the fuel electrode layer 21 when NiO in the fuel electrode layer 21 is converted into Ni. As a result, the whole stacked body 20 is contracted. This contraction is referred to as "reduction contraction" below. The size of the stacked body 20 is reduced due to the reduction contraction.

It is supposed here the case in which the reduction gas is fed to the respective fuel channels 24 in the assembled stack structure to perform the reduction process. In this case, the reduction in the size of the stacked body 20 caused by the reduction contraction produces a deviation in the relative positional relationship on the x-y plane between the conductive plates 26 of the stacked body 20 and the leg portions 34 of the interconnector 30, which are electrically connected and fixed to each other, and on the x-y plane between the portions of the air electrode layers 23 of the stacked body 20 and the projections 32 of the interconnector 30, which are electrically connected and fixed to each other.

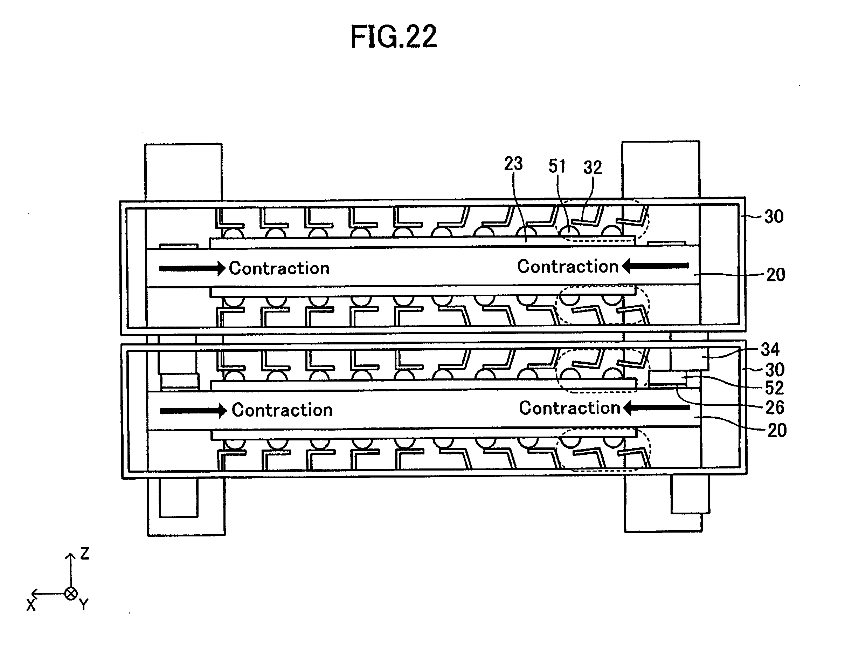

When the deviation in the relative positional relationship is great, the electrical connection might be lost at a part of the electrically connected portion between the stacked body 20 and the interconnector 30. For example, FIG. 22 illustrates the case in which some of the plural projections 32 of the interconnector 30 are separated from the conductive adhesive agents 51, resulting in that the electrical connection between some of the projections 32 and the air electrode layer 23 is lost (refer to the portion encircled by a broken line in FIG. 22).

When the electrical connection is lost at a part of the electrically connected portion between the stacked body 20 and the interconnector 30, the electrical resistance between the stacked body 20 and the interconnector 30 increases, with the result that the output from the fuel cell 10 as a whole might be reduced. It is desired to suppress the degree of the reduction contraction in order to prevent the situation described above.

On the other hand, it has been found that the degree of the reduction contraction is suppressed by the fuel electrode layer 21 (fuel-electrode current-collecting layer 21 a) containing zircon, compared to the fuel electrode layer 21 not containing zircon (i.e., the fuel electrode layer 21 in which the fuel-electrode current-collecting layer 21 a and the fuel-electrode active layer 21 b are both made of only Ni and YSZ). Accordingly, the above-mentioned deviation in the relative positional relationship is more decreased when zircon is contained in the fuel electrode layer 21 (fuel-electrode current-collecting layer 21 a) as in the present embodiment, than in the case in which the zircon is not contained in the fuel electrode layer 21, whereby the situation in which the electrical connection is lost at a part of the electrically-connected portion between the stacked body 20 and the interconnector 30 is difficult to occur. As a result, the situation in which the output from the fuel cell 10 as a whole is decreased can be prevented. The "effect of suppressing the reduction contraction" described above can more surely be exhibited by setting the thickness of the "fuel-electrode active layer 21 b not containing zircon" to be sufficiently smaller than the thickness of " the fuel-electrode current-collecting layer 21 containing zircon" (i.e., by increasing the area, containing zircon, in the entire fuel electrode layer 21).

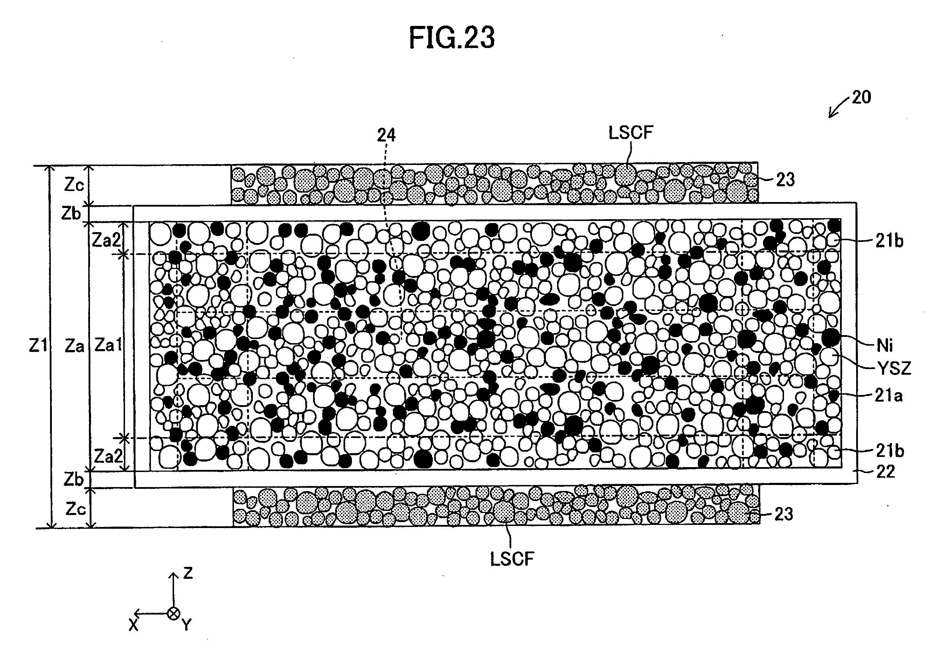

The experiment that is conducted for confirming this fact will be described. In this experiment, a stacked body obtained by replacing all zircons in the fuel-electrode current-collecting layer 21 a with YSZ in the above-mentioned embodiment illustrated in FIG. 21 is employed as a comparative example as illustrated in FIG. 23. Specifically, the contained amount of Ni is the same in the embodiment in FIG. 21 and the comparative example in FIG. 23. In other words, the amount of O (oxygen) removed from the fuel electrode layer 21 due to the conversion into Ni from NiO through the execution of the reduction process is the same.

In the experiment, plural types of the stacked bodies, each of which corresponds to the embodiment Illustrated in FIG. 21 and contains zircon in a different contained amount, and a stacked body corresponding to the comparative example in FIG. 23 are formed and prepared according to the above-mentioned manufacturing method. Then, the stack structures are formed for every type of the stacked bodies, and the reduction gas is fed to the fuel channel 24 of each of the stack structures to perform the reduction process. The resistance value, output density, and electrical connection state at the electrically connected portion are evaluated for each stack structure. Table 1 shows the result of the evaluation.

**Table 1**

| | Ni (vol. %) | YSZ (viol %) | ZrSiO₄ (Vol. %) | Resistance Value (Ωcm²) | Output (mW/cm²) | Result of evaluation |
|---|---|---|---|---|---|---|
| Standard 1 | 45 | 55 | 0 | 0.55 | 210 | X (There is disconnected portion) |
| Standard 2 | 45 | 53 | 2 | 0.53 | 230 | X (There is disconnected portion) |
| Standard 3 | 45 | 52 | 3 | 0.45 | 330 | O (Satisfactory) |
| Standard 4 | 45 | 50 | 5 | 0.46 | 320 | O (Satisfactory) |
| Standard 5 | 45 | 40 | 10 | 0.42 | 330 | O (Satisfactory) |
| Standard 6 | 45 | 35 | 15 | 0.48 | 290 | O (Satisfactory) |
| Standard 7 | 45 | 33 | 23 | 0.44 | 320 | O (Satisfactory) |
| Standard 8 | 45 | 25 | 30 | 0.43 | 320 | O (Satisfactory) |
| Standard 9 | 45 | 20 | 35 | 0.58 | 220 | X (Resistance increased) |
| Standard 10 | 45 | 15 | 40 | 0.65 | 150 | X (Resistance increased) |

In Table 1, the standard 1 corresponds to the comparative example (contained amount of zircon = 0), while the standards 2 to 10 correspond to the embodiment (contained amount of zircon > 0). As illustrated in Table 1, the contained amounts of Ni in the standards 1 to 10 are fixed to be 45 vol.%. On the other hand, the contained amounts of zircon in the standards 1 to 10 are adjusted to be 10 types of different values within the range of 0 to 40 vol.% under the condition in which the sum of the contained amount of YSZ and the contained amount of zircon is fixed to be 55 vol.%.

An additional remark will be made for this experiment. The stacked body used for this experiment had a box shape, wherein the length A1 of the long side was 120 mm, the length B1 of the short side was 60 mm, and the thickness Z1 was 1.5 mm (see FIG. 6). The electrolyte layer was formed in such a manner that a film of 3YSZ having a thickness of 5 µm was formed on the surface of the fuel electrode layer (powder compact), and this film was fired under 1400 °C for 1 hr. A reaction preventing layer made of GDC was interposed between the electrolyte layer and the air electrode layer. The reaction preventing layer was formed in such a manner that a film made of GDC having a thickness of 5 µm was formed on the surface of the electrolyte layer with a printing method, and this film was fired under 1350 °C for 1 hr. The air electrode layer was formed in such a manner that a film of LSCF having a thickness of 30 µm was formed on the surface of the reaction preventing layer with the printing method, and this film was fired under 1000 °C for 1 hr.

A value at 750 °C, which was obtained by using one of known impedance analysis methods, was employed as the resistance value. A value at a voltage of 0.8 (V) under 705 °C, which was obtained from a current - voltage characteristic (I - V characteristic), was employed as the output density. The electrically connected state at the electrically connected portion was confirmed by the process described below. Firstly, the stack structure, whose temperature was lowered, was immersed into a zirconia slurry. Then, the stack structure was dried at 120 °C. After being dried, the stack structure was disassembled to confirm whether the white slurry enters the electrically connected portion or not. The condition in which the slurry does not enter means that the connection state is normal, while the condition in which the slurry enters means that the connection state is abnormal.

As illustrated in Table 1, those having the contained amount of zircon of 3 to 30 vol.% (i.e., standards 3 to 8) in the above-mentioned embodiments have the resistance values apparently smaller and have the output density apparently greater than those of the others (i.e., standards 1, 2, 9, 10). Further, the connection state at the electrically connected portion is also normal. This means that, even if the amount of O (oxygen) removed from the fuel electrode layer 21 is the same, the degree of the reduction contraction is more reduced in the standards 3 to 8 in which the zircon is contained in the fuel electrode layer 21 (fuel-electrode current-collecting layer 21 a) in an appropriate amount, than in the case in which the zircon is not contained.

The condition in which the resistance value is great and the output density is small in the standards 1 and 2 is caused because the electrical connection is lost at a part of the electrically connected portion. This means that the degree of the reduction contraction cannot be decreased, because the contained amount of zircon is too small. The condition in which the resistance value is great and the output density is small in the standards 9 and 10 is caused because the resistance value of the fuel electrode layer itself is great due to the excessively great contained amount of zircon.

As explained above, the solid oxide fuel cell (SOFC) 10 having the stack structure according to the embodiment of the present invention has the stack structure in which plural interconnectos 30, each of which accommodates the corresponding stacked body 20, are stacked. Each of the stacked bodies 20 includes the fuel electrode layer 21, which has the fuel channel 24 formed therein and which serves as an anode electrode, the electrolyte layer 22, and the air electrode layer 23 that serves as a cathode electrode. The fuel electrode layer 21 contains zircon (ZrSiO₄). Accordingly, the degree of contraction of the fuel electrode layer 21, which contraction is caused when the reduction process is executed to the fuel electrode layer 21 in order to allow the fuel electrode layer 21 to serve as the anode electrode, is reduced. Consequently, the present invention can prevent the occurrence of the situation in which the electrical connection is lost at a part of the electrically connected portion between the stacked body 20 and the interconnector 30, which is caused by the above-mentioned contraction, in case where the reduction process is performed to each of the fuel electrode layers 21 in the assembled stack structure.

The other effects, other than the suppression of the reduction contraction, obtained by containing the zircon into the fuel electrode layer 21 will be described below.
1. The zircon has a property of not reacting with NiO and YSZ. Therefore, the alteration of NiO and YSZ in the fuel electrode layer 21 can be prevented.
2. The Young's modulus of the zircon is extremely great such as about 300 GPa. Therefore, the rigidity of the fuel-electrode current-collecting layer 21 a serving as the support layer of the stacked body can be increased, which is advantageous in making the stacked body flat and thin.
3. During when the SOFC is used, the grain growth (sintering) of the Ni in the fuel electrode layer 21 may be produced. The conduction path (specifically, the path through which electrons pass) connected and formed due to the contact of Ni particles in the fuel electrode layer 21 changes, whereby the conductivity of the fuel electrode layer 21 is generally lowered. When the fuel electrode layer 21 contains zircon, the grain growth can be prevented. Specifically, the reduction in the conductivity of the fuel electrode layer 21 caused by the grain growth can be prevented.
4. The zircon itself does not become a poisoning source of the fuel electrode layer 21 during when the SOFC is used.

The present invention is not limited to the above-described embodiment, but can be modified in various other forms without departing from the scope of the present invention. For example, in the above-mentioned embodiment, the fuel electrode layer includes two layers that are the layer (fuel-electrode active layer) not containing zircon and the layer (fuel-electrode current-collecting layer) containing zircon. However, it may be configured such that the fuel electrode layer includes two or more layers, each of which contains zircon and has the different contained amount of zircon. The zircon particles may uniformly be distributed in each of the layers containing zircon, or it may be configured such that the zircon particles are uniformly distributed in the x-y plane direction and the contained amount of the zircon particles (contained amount of zircon) per unit volume is gradually changed in the z-axis direction.

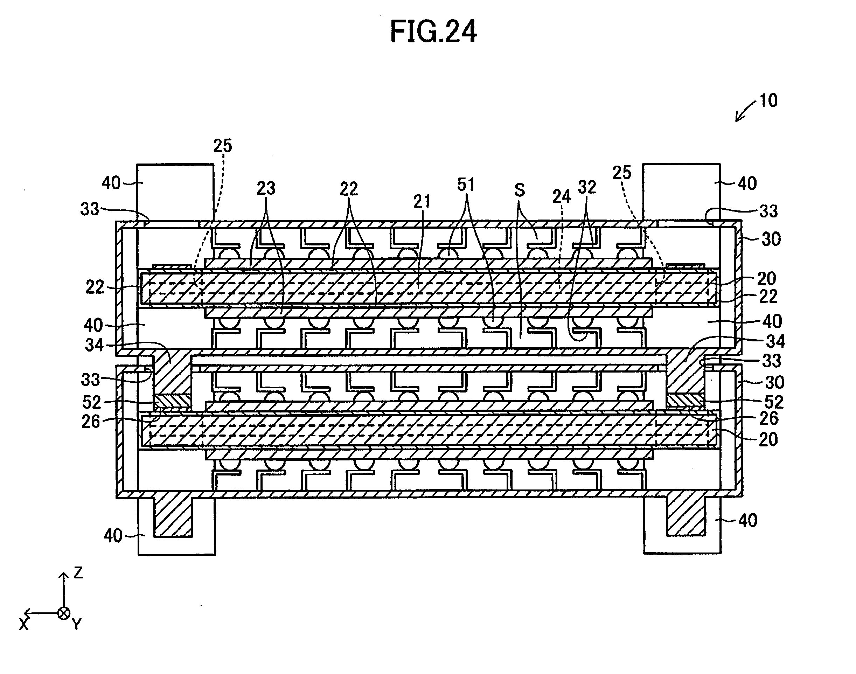

As illustrated in FIG. 24, the fuel electrode layer 21 may include only one layer containing zircon. In this fuel electrode layer 21, the zircon particles may be distributed uniformly or non-uniformly.

In the embodiment described above, the electrolyte layer 22 is formed on the surface of the fuel electrode layer 21 so as to enclose the surrounding (upper, lower, and side surfaces) of the fuel electrode layer 21 in the stacked body 20. However, the electrolyte layer may be formed only on the upper and lower surfaces of the fuel electrode layer 21, and not formed on the side faces (four faces) of the fuel electrode layer. In this case, in order to separate the air channel S and the fuel channel 24, the side faces of the fuel electrode layer 21 (or the entire side faces of the stacked body 20) has to be covered by a side wall, instead of the electrolyte layer, that has a function of separating the air channel S and the fuel channel 24. in this case, a glass material is used as the side wall.

In the above-described embodiment, the portion in the fuel electrode layer 21 other than the portion containing zircon can be formed from, for example, platinum, platinum-zirconia cermet, platinum-cerium-oxide cermet, ruthenium, or ruthenium-zirconia cermet.

Also, the air electrode layer 23 can be formed from, for example, lanthanum-containing perovskite-type complex oxide (e.g., lanthanum manganite, lanthanum cobaltite, or lanthanum ferrite, in addition to the above-mentioned lanthanum strontium cobalt ferrite). Lanthanum cobaltite, lanthanum manganite and lanthanum ferrite may be doped with strontium, calcium, chromium, cobalt, iron, nickel, aluminum, or the like. Also, the air electrode layer 23 may be formed from palladium, platinum, ruthenium, platinum-zirconia cermet, palladium-zirconia cermet, ruthenium-zirconia cermet, platinum-cerium-oxide cermet, palladium-cerium-oxide cermet, or ruthenium-cerium-oxide cermet.

In the above-mentioned embodiment, the shape of the x-y plane of the stacked body 20 is rectangular. However, the stacked body 20 may have a planar shape of square, circle, ellipse, etc. In these cases, it is preferable that the diameter, when it is circle, the major axis, when it is elliptic, and the length of one side, when it is square, is 3 cm or more.

In the above-described embodiment, the fuel-electrode current-collecting layer 21a is a porous fired body formed from Ni, YSZ (yttria-stabilized zircon), and zircon (ZrSiO₄) (after the reduction process). However, the fuel-electrode current-collecting layer 21a may a porous fired body formed from Ni, Y₂O₃ (yttria), and zircon (ZrSiO₄) (after the reduction process).

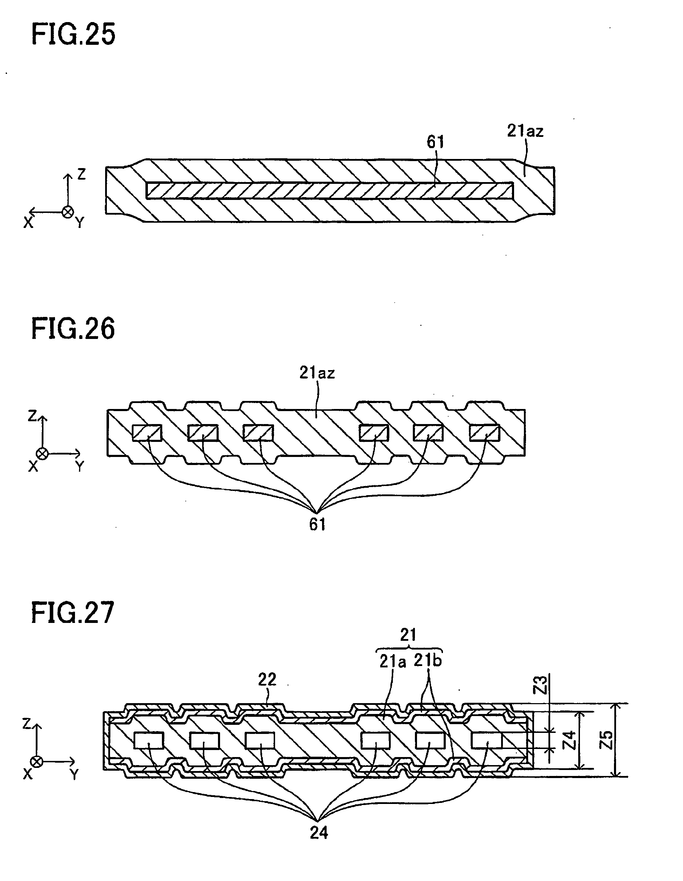

In the above-described embodiment, the upper and the lower surfaces of the powder compact 21 az, which is to become the fuel-electrode current-collecting layer 21 a afterward, are shown as a plane as illustrated in FIGS. 13 and 14. However, the upper and lower surfaces of the powder compact 21 az are formed with irregularities corresponding to the shape of the channel forming member 61 in such a manner that the thickness of the portion corresponding to the area where the channel forming member 61 is present is greater than the thickness of the portion corresponding to the other areas as viewed from the z-axis direction, as illustrated in FIGS. 25 and 26, because of the difference in the contraction property between the channel forming member 61 and the powder 62 during the press molding. As a result, the similar irregularities are also formed, as illustrated in FIG. 27, on the upper and lower surfaces of the stacked body formed with the use of the powder compact 21 az that has the irregularities formed on the upper and lower surfaces. As one example of the stacked body illustrated in FIG. 27, the height Z3 of the fuel channel 24 is 100 to 500 µm, the thickness Z4 of the portion corresponding to the area where the fuel channel 24 is not present is 1000 to 1500 µm as viewed from the z-axis direction, and the thickness Z5 of the portion corresponding to the area where the fuel channel 24 is present is 1100 to 2000 µm as viewed from the z-axis direction.

The stacked body illustrated in FIG. 27 has a feature such that, as viewed from the thickness direction, the thickness of the portion of the fuel electrode layer corresponding to the area where the fuel gas channel is present is greater than the thickness of the portion corresponding to the area where the fuel gas channel is not present, and the thickness of the portion of the stacked body corresponding to the area where the fuel gas channel is present is greater than the thickness of the portion corresponding to the area where the fuel gas channel is not present. The operation and effect produced by the formation of irregularities on the upper and lower surfaces of the stacked body will be added below.

Firstly, the similar irregularities are formed on the portion of the electrolyte layer 22, which encloses the surrounding of the fuel electrode layer 21, corresponding to the upper and lower surfaces of the stacked body. Since the irregularities are formed on the electrolyte layer 22 as described above, the rigidity of the electrolyte layer 22 with respect to the deformation is increased, compared to the case in which the irregularities are not formed. As a result, even if the fuel electrode layer 21, which is enclosed by the electrolyte layer 22, tends to contract due to the reduction process, this contraction (i.e., reduction contraction) can be suppressed.

When the irregularities are not formed on the upper and lower surfaces of the stacked body in case where the stacked body is extremely thin, the thickness of the portion of the fuel-electrode current-collecting layer 21a corresponding to the area where the fuel channel 24 is formed is likely to be small as viewed from the z-axis direction. As a result, the strength of the entire stacked body is likely to be insufficient. On the other hand, when the irregularities are formed on the upper and lower surfaces of the stacked body, the rigidity of the entire stacked body with respect to the deformation is increased. Consequently, the strength of the stacked body can be maintained.

## Claims

1. A stacked body (20) for a solid oxide fuel cell (10) comprising:
a fuel electrode layer (21) that has a channel (24) of a fuel gas formed therein and that is brought into contact with the fuel gas circulating in the channel (24) of the fuel gas so as to allow the fuel gas to react;
an electrolyte layer (22) that is formed on one of the upper and lower surfaces of the fuel electrode layer (21) and that is made of a solid electrolyte; and
an air electrode layer (23) that is formed on the surface of the electrolyte layer (22) and is brought into contact with a gas containing oxygen to allow the gas containing oxygen to react, **characterized in that**
the fuel electrode layer (21) is a fired body containing a particle of a first material for allowing an oxygen ion to pass, a particle of a second material for allowing an electron to pass, and a particle of a zircon;
the fuel electrode layer (21) includes a first fuel electrode layer (21 a) that is a base of the fuel electrode layer (21), and a second fuel electrode layer (21 b) that is stacked between the first fuel electrode layer (21 a) and the electrolyte layer (22),
wherein
the first fuel electrode layer (21 a) contains the particle of the second material, and the particle of the zircon, and the zircon particle is uniformly distributed in the first fuel electrode layer (21a),
the second fuel electrode layer (21b) contains only the particle of the first material and the particle of the second material; and
the thickness of the first fuel electrode layer (21 a) is 500 to 3000 µm, the thickness of the second fuel electrode layer (21b) is 3 to 30 µm, the thickness of the electrolyte layer (22) is 1 to 20 µm, and the thickness of the air electrode layer (23) is 3 to 50 µm respectively.

2. A stacked body (20) for a solid oxide fuel cell (10) according to claim 1, **characterized in that**
the second fuel electrode layer (21 b) in the fuel electrode layer (21) has a contained amount of the first material greater than that of the first fuel electrode layer (21a), wherein
the first fuel electrode layer (21 a) contains the particle of the first material in addition to the particle of the second material and the particle of the zircon.

3. A stacked body (20) for a solid oxide fuel cell (10) according to claim 2,
**characterized in that**
the stacked body (20) has a shape of a circle, an ellipse, a square, or a rectangle, as viewed from the thickness direction of the stacked body, wherein the diameter of the circle, the major axis of the ellipse, the length of one side of the square, or the length of the long side of the rectangle is 3 cm or more.

4. A stacked body (20) for a solid oxide fuel cell (10) according to claim 2 or claim 3, **characterized in that**
the contained amount of the zircon particle in the first fuel electrode layer (21a) is 3 to 30 vol.%.

5. A stacked body (20) for a solid oxide fuel cell (10) according to any one of claims 2 to 4, **characterized in that**
the diameter of the particle of the first material contained in the first fuel electrode layer (21 a) is 0.3 to 1.5 µm, the diameter of the particle of the second material contained in the first fuel electrode layer (21 a) is 0.5 to 2 µm, and the diameter of the zircon particle contained in the first fuel electrode layer (21 a) is 0.7 to 2.5 µm, respectively.

6. A stacked body (20) for a solid oxide fuel cell (10) according to claim 1,
**characterized in that**
the stacked body (20) has a shape of a circle, an ellipse, a square, or a rectangle, as viewed from the thickness direction of the stacked body, wherein the diameter of the circle, the major axis of the ellipse, the length of one side of the square, or the length of the long side of the rectangle is 3 cm or more.

7. A stacked body (20) for a solid oxide fuel cell (10) according to claim 1 or claim 6, **characterized in that**
the contained amount of the zircon particle in the first fuel electrode layer (21 a) is 3 to 30 vol.%.

8. A stacked body (20) for a solid oxide fuel cell (10) according to any one of claims 1 to 7, **characterized in that**
the electrolyte layer (22) is formed on the surface of the fuel electrode layer (21) so as to enclose the surrounding of the fuel electrode layer (21), and the air electrode layer (23) is formed respectively on the upper surface of the portion of the electrolyte layer (22) formed on the upper surface of the fuel electrode layer (21) and the lower surface of the portion of the electrolyte layer (22) formed on the lower surface of the fuel electrode layer (21).

9. A solid oxide fuel cell (10) comprising plural stacked bodies (20) according to any one of claims 1 to 8, and current-collector holding members (30), each of which is made of a conductive material for arranging and fixing the corresponding stacked body (20), **characterized in that**
two adjacent stacked bodies (20) are stacked so as to be separated from each other in the thickness direction of the stacked body (20), a connection portion of the fuel electrode layer (21) of one of the adjacent stacked bodies (20) and a connection portion of the air electrode layer (23) of the other stacked body (20) are electrically connected to each other via the current-collector holding member (30), and
a channel of the gas containing oxygen is formed and defined in a space formed between the two adjacent stacked bodies (20).

## Patentansprüche

1. Stapelkörper (20) für eine Festoxidbrennstoffzelle (10), umfassend:
eine Brennstoffelektrodenschicht (21), die einen in dieser ausgebildeten Brennstoffgaskanal (24) aufweist und die mit dem im Brennstoffgaskanal (24) zirkulierenden Brennstoffgas in Kontakt gebracht wird, sodass eine Reaktion des Brennstoffgases ermöglicht wird;
eine Elektrolytschicht (22), die auf einer der Ober- und der Unterseite der Brennstoffelektrodenschicht (21) ausgebildet und aus Festelektrolyt hergestellt ist; und
eine Luftelektrodenschicht (23), die auf der Oberfläche der Elektrolytschicht (22) ausgebildet und mit einem Sauerstoff-haltigem Gas in Kontakt gebracht wird, sodass eine Reaktion des Sauerstoff-haltigen Gases ermöglicht wird; **dadurch gekennzeichnet, dass**
die Brennstoffelektrodenschicht (21) ein gebrannter Körper ist, der Teilchen eines ersten Materials, um das Hindurchtreten eines Sauerstoffions zu ermöglichen, Teilchen eines zweiten Materials, um das Hindurchtreten eines Elektrons zu ermöglichen und Teilchen aus Zirkonium umfasst; und dadurch, dass
die Brennstoffelektrodenschicht (21) eine erste Brennstoffelektrodenschicht (21 a), die eine Basis der Brennstoffelektrodenschicht (21) ist, und eine zweite Brennstoffelektrodenschicht (21 b) umfasst, die zwischen der ersten Brennstoffelektrodenschicht (21 a) und der Elektrolytschicht (22) gestapelt ist,
worin
die erste Brennstoffelektrodenschicht (21 a) die Teilchen des zweiten Materials und die Teilchen aus Zirkonium umfasst, und dass die Zirkoniumteilchen in der ersten Brennstoffelektrodenschicht (21 a) gleichmäßig verteilt sind;
die zweite Brennstoffelektrodenschicht (21 b) nur die Teilchen des ersten Materials und die Teilchen des zweiten Materials umfasst; und
jeweils die Dicke der ersten Brennstoffelektrodenschicht (21 a) 500 bis 3000 µm, die Dicke der zweiten Brennstoffelektrodenschicht (21 b) 3 bis 30 µm, die Dicke der Elektrolytschicht (22) 1 bis 20 µm und die Dicke der Luftelektrodenschicht (23) 3 bis 50 µm beträgt.

2. Stapelkörper (20) für eine Festoxidbrennstoffzelle (10) nach Anspruch 1, **dadurch gekennzeichnet, dass**
die zweite Brennstoffelektrodenschicht (21 b) in der Brennstoffelektrodenschicht (21) eine Menge des ersten Materials aufweist, die größer ist als die der ersten Brennstoffelektrodenschicht (21 a), worin
die erste Brennstoffelektrodenschicht (21 a) zusätzlich zu den Teilchen des zweiten Materials und den Zirkoniumteilchen die Teilchen des ersten Materials enthält.

3. Stapelkörper (20) für eine Festoxidbrennstoffzelle (10) nach Anspruch 2,
**dadurch gekennzeichnet, dass**
der Stapelkörper (20), von der Dickenrichtung des Stapelkörpers aus gesehen, die Form eines Kreises, einer Ellipse, eines Quadrats oder eines Rechtecks aufweist, worin der Durchmesser des Kreises, die Hauptachse der Ellipse, die Seitenlänge des Quadrats oder die lange Seite des Rechtecks 3 cm oder mehr beträgt.

4. Stapelkörper (20) für eine Festoxidbrennstoffzelle (10) nach Anspruch 2 oder 3, **dadurch gekennzeichnet, dass**
die enthaltene Menge der Zirkoniumteilchen in der ersten Brennstoffelektrodenschicht (21 a) 3 bis 30 Vol.-% beträgt.

5. Stapelkörper (20) für eine Festoxidbrennstoffzelle (10) nach einem der Ansprüche 2 bis 4, **dadurch gekennzeichnet, dass** jeweils
der Durchmesser der Teilchen des ersten Materials in der ersten Brennstoffelektrodenschicht (21 a) 0,3 bis 1,5 µm, der Durchmesser der Teilchen des zweiten Materials in der ersten Brennstoffelektrodenschicht (21 a) 0,5 bis 2 µm und der Durchmesser der Zirkoniumteilchen in der ersten Brennstoffelektrodenschicht (21 a) 0,7 bis 2,5 µm beträgt.

6. Stapelkörper (20) für eine Festoxidbrennstoffzelle (10) nach Anspruch 1,
**dadurch gekennzeichnet, dass**
der Stapelkörper (20), von der Dickenrichtung des Stapelkörpers aus gesehen, die Form eines Kreises, einer Ellipse, eines Quadrats oder eines Rechtecks aufweist, worin der Durchmesser des Kreises, die Hauptachse der Ellipse, die Seitenlänge des Quadrats oder die lange Seite des Rechtecks 3 cm oder mehr beträgt.

7. Stapelkörper (20) für eine Festoxidbrennstoffzelle (10) nach Anspruch 1 oder 6, **dadurch gekennzeichnet, dass**
die enthaltene Menge der Zirkoniumteilchen in der ersten Brennstoffelektrodenschicht (21 a) 3 bis 30 Vol.-% beträgt.

8. Stapelkörper (20) für eine Festoxidbrennstoffzelle (10) nach einem der Ansprüche 1 bis 7, **dadurch gekennzeichnet, dass**
die Elektrolytschicht (22) auf der Oberfläche der Brennstoffelektrodenschicht (21) ausgebildet ist, um die Umgebung der Brennstoffelektrodenschicht (21) zu umschließen, und die Luftelektrodenschicht (23) jeweils auf der Oberseite des auf der Oberseite der Brennstoffelektrodenschicht (21) ausgebildeten Abschnitts der Elektrolytschicht (22) bzw. auf der Unterseite des auf der Unterseite der Brennstoffelektrodenschicht (21) ausgebildeten Abschnitts der Elektrolytschicht (22) ausgebildet ist.

9. Festoxidbrennstoffzelle (10), umfassend mehrere Stapelkörper (20) nach einem der Ansprüche 1 bis 8, und Stromsammlerhalteelemente (30), von denen jedes aus einem leitfähigen Material zum Anordnen und Befestigen des entsprechenden Stapelkörpers (20) hergestellt ist, **dadurch gekennzeichnet, dass**
zwei benachbarte Stapelkörper (20) gestapelt sind, um in der Dickenrichtung des Stapelkörpers (20) voneinander getrennt zu sein, wobei ein Verbindungsabschnitt der Brennstoffelektrodenschicht (21) eines der benachbarten Stapelkörper (20) und ein Verbindungsabschnitt der Luftelektrodenschicht (23) des anderen Stapelkörpers (20) über das Stromsammlerhalteelement (30) elektrisch miteinander verbunden sind, und dass
ein Kanal des Sauerstoff-haltigen Gases in einem zwischen den zwei benachbarten Stapelkörpern (20) ausgebildeten Raum ausgebildet und definiert ist.

## Revendications

1. Corps empilé (20) pour une pile à combustible à oxyde solide (10) comprenant :
une couche d'électrode de combustible (21) dans laquelle un canal (24) d'un combustible gazeux est formé et qui est amenée en contact avec le combustible gazeux circulant dans le canal (24) du combustible gazeux de manière à permettre au combustible gazeux de réagir ;
une couche d'électrolyte (22) qui est formée sur l'une des surfaces supérieure et inférieure de la couche d'électrode de combustible (21) et qui est constituée d'un électrolyte solide ; et
une couche d'électrode d'air (23) qui est formée sur la surface de la couche d'électrolyte (22) et qui est amenée en contact avec un gaz contenant de l'oxygène pour permettre au gaz contenant de l'oxygène de réagir, **caractérisé en ce que**
la couche d'électrode de combustible (21) est un corps cuit contenant une particule d'un premier matériau pour permettre le passage d'un ion d'oxygène, une particule d'un deuxième matériau pour permettre le passage d'un électron, et une particule d'un zircon ;
la couche d'électrode de combustible (21) comprend une première couche d'électrode de combustible (21a) qui est une base de la couche d'électrode de combustible (21), et une deuxième couche d'électrode de combustible (21b) qui est empilée entre la première couche d'électrode de combustible (21a) et la couche d'électrolyte (22),
dans lequel
la première couche d'électrode de combustible (21a) contient la particule du deuxième matériau, et la particule du zircon, et la particule de zircon est répartie de manière uniforme dans la première couche d'électrode de combustible (21a),
la deuxième couche d'électrode de combustible (21b) contient seulement la particule du premier matériau et la particule du deuxième matériau ; et
l'épaisseur de la première couche d'électrode de combustible (21a) est de 500 à 3000 µm, l'épaisseur de la deuxième couche d'électrode de combustible (21b) est de 3 à 30 µm, l'épaisseur de la couche d'électrolyte (22) est de 1 à 20 µm, et l'épaisseur de la couche d'électrode d'air (23) est de 3 à 50 µm, respectivement.

2. Corps empilé (20) pour une pile à combustible à oxyde solide (10) selon la revendication 1, **caractérisé en ce que**
la deuxième couche d'électrode de combustible (21b) dans la couche d'électrode de combustible (21) a une quantité contenue du premier matériau supérieure à celle de la première couche d'électrode de combustible (21a), dans lequel
la première couche d'électrode de combustible (21a) contient la particule du premier matériau en plus de la particule du deuxième matériau et de la particule du zircon.

3. Corps empilé (20) pour une pile à combustible à oxyde solide (10) selon la revendication 2,
**caractérisé en ce que**
le corps empilé (20) a la forme d'un cercle, d'une ellipse, d'un carré, ou d'un rectangle, tel que vu à partir de la direction d'épaisseur du corps empilé, dans lequel le diamètre du cercle, l'axe principal de l'ellipse, la longueur d'un côté du carré, ou la longueur du côté long du rectangle est de 3 cm ou plus.

4. Corps empilé (20) pour une pile à combustible à oxyde solide (10) selon la revendication 2 ou la revendication 3,
**caractérisé en ce que**
la quantité contenue de la particule de zircon dans la première couche d'électrode de combustible (21a) est de 3 à 30 % en volume.

5. Corps empilé (20) pour une pile à combustible à oxyde solide (10) selon l'une quelconque des revendications 2 à 4, **caractérisé en ce que**
le diamètre de la particule du premier matériau contenu dans la première couche d'électrode de combustible (21a) est de 0,3 à 1,5 µm, le diamètre de la particule du deuxième matériau contenu dans la première couche d'électrode de combustible (21a) est de 0,5 à 2 µm, et le diamètre de la particule de zircon contenue dans la première couche d'électrode de combustible (21a) est de 0,7 à 2,5 µm, respectivement.

6. Corps empilé (20) pour une pile à combustible à oxyde solide (10) selon la revendication 1,
**caractérisé en ce que**
le corps empilé (20) a la forme d'un cercle, d'une ellipse, d'un carré, ou d'un rectangle, tel que vu à partir de la direction d'épaisseur du corps empilé, dans lequel le diamètre du cercle, l'axe principal de l'ellipse, la longueur d'un côté du carré, ou la longueur du côté long du rectangle est de 3 cm ou plus.

7. Corps empilé (20) pour une pile à combustible à oxyde solide (10) selon la revendication 1 ou la revendication 6, **caractérisé en ce que**
la quantité contenue de la particule de zircon dans la première couche d'électrode de combustible (21a) est de 3 à 30 % en volume.

8. Corps empilé (20) pour une pile à combustible à oxyde solide (10) selon l'une quelconque des revendications 1 à 7,
**caractérisé en ce que**
la couche d'électrolyte (22) est formée sur la surface de la couche d'électrode de combustible (21) de manière à enfermer les alentours de la couche d'électrode de combustible (21), et la couche d'électrode d'air (23) est formée respectivement sur la surface supérieure de la partie de la couche d'électrolyte (22) formée sur la surface supérieure de la couche d'électrode de combustible (21) et sur la surface inférieure de la partie de la couche d'électrolyte (22) formée sur la surface inférieure de la couche d'électrode de combustible (21).

9. Pile à combustible à oxyde solide (10) comprenant plusieurs corps empilés (20) selon l'une quelconque des revendications 1 à 8, et des éléments de maintien de collecteur de courant (30), chacun d'eux étant constitué d'un matériau conducteur pour agencer et fixer le corps empilé (20) correspondant, **caractérisée en ce que**
deux corps empilés (20) adjacents sont empilés de manière à être séparés l'un de l'autre dans la direction d'épaisseur du corps empilé (20), une partie de connexion de la couche d'électrode de combustible (21) de l'un des corps empilés (20) adjacents et une partie de connexion de la couche d'électrode d'air (23) de l'autre corps empilé (20) sont connectées électriquement l'une à l'autre par l'intermédiaire de l'élément de maintien de collecteur de courant (30), et
un canal du gaz contenant de l'oxygène est formé et défini dans un espace formé entre les deux corps empilés (20) adjacents.
